(19) Europäisches Patentamt
European Patent Office
Office européen des brevets

(11) EP 2 268 757 B1

(12) # EUROPÄISCHE PATENTSCHRIFT

(45) Veröffentlichungstag und Bekanntmachung des Hinweises auf die Patenterteilung:
**18.01.2012 Patentblatt 2012/03**

(21) Anmeldenummer: **09735275.1**

(22) Anmeldetag: **03.04.2009**

(51) Int Cl.:
***C09J 11/00*** *(2006.01)*

(86) Internationale Anmeldenummer:
**PCT/EP2009/002492**

(87) Internationale Veröffentlichungsnummer:
**WO 2009/129923 (29.10.2009 Gazette 2009/44)**

(54) **KLEBSTOFF**

ADHESIVE

ADHÉSIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.04.2008 DE 102008020441**

(43) Veröffentlichungstag der Anmeldung:
**05.01.2011 Patentblatt 2011/01**

(73) Patentinhaber: **Merck Patent GmbH**
**64293 Darmstadt (DE)**

(72) Erfinder:
- **JONSCHKER, Gerhard**
  **64646 Heppenheim (DE)**
- **FRIEDRICH, Reiner**
  **64342 Seeheim-Jugenheim (DE)**
- **PAHNKE, Joerg**
  **64285 Darmstadt (DE)**

(56) Entgegenhaltungen:
**EP-A- 1 820 819**
**WO-A-00/32688**
**WO-A-03/042315**
**WO-A-2008/045270**
**WO-A-2008/146014**
**US-A1- 2006 019 088**
**US-B1- 6 291 593**

EP 2 268 757 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft einen Kern-Schale-Partikel enthaltenden Klebstoff, Verfahren zu dessen Herstellung sowie die Verwendung von Kern-Schale-Partikeln als Zuschlagsstoff für Klebstoffe.

Klebstoffe sind gemäß DIN EN 923: 2006-01 nichtmetallische Stoffe, die Fügeteile durch Adhäsion und Kohäsion verbinden. Nach Römpp Chemielexikon basieren Klebstoffe überwiegend auf organischen Verbindungen und können in unterschiedliche Klebstofftypen unterteilt werden: in physikalisch abbindende (Leime, Kleister, Lösemittel-, Dispersions-, Plastisol- und Schmelzklebstoffe) und chemisch abbindende (z.B. Cyanacrylat-Klebstoffe). Die physikalisch abbindenden Klebstoffe können lösemittelfrei (Schmelzklebstoffe) oder lösemittelhaltig sein. Sie binden durch Änderung des Aggregatzustands oder durch Verdunsten der Lösemittel vor oder während des Verklebungsprozesses ab und sind im Allgemeinen einkomponentig. Die chemisch abbindenden, ein- oder mehrkomponentigen Reaktionsklebstoffe können auf allen Polyreaktionen basieren: Zweikomponenten-Systeme aus Epoxidharzen und Säureanhydriden bzw. Polyaminen reagieren nach Polyadditions-Mechanismen, Cyanacrylate oder Methacrylate nach Polymerisations-Mechanismen und Systeme auf Aminoplast- oder Phenoplast-Basis (siehe Phenol-Harze) nach Polykondensations-Mechanismen. Die modernste Klasse der Klebstoffe stellen die Polyurethan-Klebstoffe dar. Auch Silicone und Silan-vernetzende Polymere werden als Klebstoffe verwendet. Die meisten Reaktionsklebstoffe werden aus zwei Komponenten gemischt, dem eigentlichen Grundstoff und dem Härter oder Aktivator. Die Palette der als Klebstoffrohstoffe einsetzbaren Monomeren oder Polymeren ist dabei breit variabel. Im Sinne der vorliegenden Erfindung werden unter Klebstoffen darüber hinaus Vergußmassen und Rohmaterialien zur Herstellung faserverstärkter Kunststoffe verstanden.

Allen diesen Anwendungen gemein ist es, dass das klebende Polymer maßgeblich zu den anwendungstechnischen und mechanischen Eigenschaften des entstehenden Verbundes beiträgt. Es existiert eine Vielzahl von Problemen, die nicht durch die Auswahl eines Polymers oder Monomers alleine gelöst werden können, sondern die es erforderlich machen, dass dem Polymer Zuschlagsstoffe hinzugegeben werden. Diese sind auszugsweise ohne Anspruch auf Vollständigkeit:

- Reduktion der Schrumpfung beim Aushärten
- Haftung auf unterschiedlichsten Untergründen
- Stark unterschiedlicher Ausdehnungskoeffizient zwischen Polymer und verklebten Teilen
- Schlagzähigkeit bei gleichzeitig hoher Härte
- Verhinderung der katastrophalen Rißausbreitung im Verbund, z.B. bei schlagartiger Belastung
- Hoher Tg
- Sprunghafte Änderung der mechanischen Eigenschaften des Verbunds beim Überschreiten des Tg des Polymers.
- Temperaturbeständigkeit (Zersetzungstemperatur)
- Chemische Beständigkeit
- Alterung durch Umwelteinflüsse (z.B. UV-Strahlung)

Zuschlagsstoffe, die heute zu Polymeren gegeben werden, um einige dieser Probleme zu adressieren sind z.B. anorganische Partikel, Silikonpartikel, Silikon(block)copolymere, Kohlenstoff-Nanofasern Glasmehle oder organofunktionelle Silane.

Kennzeichnend für alle heute bekannten Produkte ist es, dass sie jeweils nur einen Wirkungsmechanismus ausüben, wie z.B. die Nanoteilchen, die als Füllstoff die Schrumpfung reduzieren und die Silikonpartikel, die die Elastizität verbessern und die Rißausbreitung hemmen. Will man mehrere Probleme adressieren, muss man verschiedene Ansätze miteinander kombinieren und 2 oder mehrere Zuschlagsstoffe zu dem Polymer zusetzen.

Generell ist die Verwendung von Zuschlagsstoffen jedweder Art in Polymeren unerwünscht, da die Komplexität und damit die Fehleranfälligkeit des Systems ansteigt. Für jeden Zuschlagsstoff muss einerseits die Dispergierbarkeit und Langzeitstabilität im Polymer gesichert werden, aber auch die Kompatibilität und die gemeinsame Wirksamkeit mit allen anderen Stoffen gewährleistet sein.

So kann es typischerweise zu Unverträglichkeiten und Wirkungsaufhebung kommen. Des Weiteren ist für den Anwender die zusätzliche Komplexität der Lagerhaltung und Produktion nachteilig, wobei man durch den Einkauf von mehreren Rohstoffen auch noch von einem Kostennachteil ausgehen kann.

WO 2008/146014 A2 beschreibt einen Klebstoff enthaltend ein klebendes Polymerharz, sowie verschiedene metallbeschichtete Additive.

In US 2006/0019088 A1 wird eine Klebeschicht für ein Klebeband offenbart, welche ein Klebebindemittel und ein polymeres partikuläres Material, wie z.B. Core-Shell-Partikel, enthält, welches im Bindemittel verteilt vorliegt. Genauere Ausführungen zum Aufbau und zu den Bestandteilen der Core-Shell-Partikel sind nicht genannt.

WO 2008/045270 A1 beschreibt Klebstoffe enthaltend Gummipartikel mit Core-Shell-Struktur. Diese besitzen einen polymeren Kern, der elastische oder gummiartige Eigenschaften hat, welcher von einem nicht-elastischen Polymermaterial umgeben ist.

EP 1820819 A1 beschreibt Zusammensetzungen, die nach Aushärten flexible Materialien mit guter Haftung ergeben. Diese können Core-Shell-Partikel enthalten, die aus einem elastischen Kernpolymer und einem starren Schalen-Polymer bestehen.

WO 03/042315 A1 offenbart Klebstoffzusammensetzungen enthaltend bestimmte Füllstoffpartikel, die bevorzugt induktiv anregbare Materialien in ihrem Inneren und eine Partikeloberfläche aus Siliciumdioxid enthalten.

WO 00/32688 und US 6291593 B1 beschreiben

Klebstoffzusammensetzungen, die Core-Shell-Polymere enthalten können, die bevorzugt ausgewählt sind aus Acrylonitril-Butadien-Styren (ABS), Methacrylat-Butadien-Styren (MBS) oder Methacrylat-Acrylonitril-Butadien-Styrene (MABS)

Der vorliegenden Erfindung lag demnach die Aufgabe zugrunde, einen Klebstoff zur Verfügung zustellen, bei dem verschiedene Anwendungsvorteile durch einen Zuschlagstoff realisiert werden können. Gegenstand der vorliegenden Erfindung ist daher ein Klebstoff enthaltend mindestens ein Matrixmaterial und Kern-Schale-Partikel umfassend Kerne mit einem Durchmesser im Bereich von 1 nm bis 1 $\mu$m mit einer Schale enthaltend Oligomere und/oder Polymere, wobei als Matrixmaterial ein Polymeres ausgewählt aus der Gruppe der Polyurethane oder ein Gemisch daraus oder entsprechend polymerisierbare Monomere oder Oligomere, oder ein Ethylen-Vinylacetat Copolymeres oder ein Gemisch aus zwei oder mehr solcher Copolymeren, enthalten sind,
dadurch gekennzeichnet, dass die Oligomere und/oder Polymere der Schale kovalent an die Oberfläche der Kerne gebunden sind und ausgewählt sind aus der Gruppe umfassend Poly(meth)acrylate, Polyester, Polyurethane, Polyharnstoffe, Silikone, Polyether, Polyamide, Polyimide, bzw. deren Gemische und Hybride,
und die Kerne auf Sulfaten oder Carbonaten von Erdalkaliverbindungen oder auf Oxiden bzw. Hydroxiden von Silizium, Titan, Zink, Zinn, Indium, Antimon, Aluminium, Cer, Cobalt, Chrom, Nickel, Eisen, Yttrium oder Zirkonium oder Mischungen hieraus basieren, die optional mit Metall-Oxiden bzw. -Hydroxiden beschichtet sein können, oder auf mit Metall-Oxiden bzw. -Hydroxiden beschichteten Metallen, wie beispielsweise Ag, Cu, Fe, Au, Pd, Pt oder Legierungen basieren.

Gegenstand der vorliegenden Erfindung sind weiter faserverstärkte Kunststoffe in denen ein erfindungsgemäßer Klebstoff als Haftvermittler zwischen den Fasern dient. Entsprechende Fasern können alle in der Technik zur Verstärkung üblichen Fasern sein, wobei Asbest, Bor-, Kohlenstoff-, Metall-, Synthese- und Glasfasern bevorzugt sind. Insbesondere Kohlefasern und Glasfaserverstärkte Kunststoffe gehören zu den bevorzugten Materialien.

Bevorzugte Schalenmaterialien sind dabei elastische Oligomere oder Polymere.

Bei erfindungsgemäß einsetzbaren Matrixmaterialien handelt es sich üblicherweise um Polymere oder Oligomere Materialien oder entsprechende polymerisierbare Monomere.

In bevorzugten Ausführungsformen der vorliegenden Erfindung können durch die Verwendung der Kern-Schale-Partikel als Zuschlagstoff in dem Klebstoff, die ebenfalls ein Gegenstand der vorliegenden Erfindung ist, verschiedene Probleme der Kleb-Nerbundwerkstofftechnologie gleichzeitig adressiert werden:

- Der Kern kann als Nanofüllstoff wirken und kann die Schrumpfung verringern.
- Die elastische Hülle kann als Schlagzähmodifizierung wirken und damit die Bruchzähigkeit des Polymers verbessern.
- Die elastische Kugelschale direkt auf dem Nanofüllstoff kann es ermöglichen, die Menge an elastischem Polymer sehr viel kleiner zu wählen, als durch z.B. Gummipartikel, die derzeit nur in Größen > 100 nm auf dem Markt erhältlich sind. Dadurch kann das elastische Polymer viel homogener in das Polymer eingebracht werden, als durch die herkömmlichen Füllstoffe.
- Durch die elastische Aufhängung der Nanofüllstoffe im Polymer kann deren Anbindung im Polymer verbessert werden und die Wirkung als Verstärkerfüllstoff noch verbessert werden.
- Reaktive Gruppen auf der Schalen-Polymerhülle können mit dem Klebstoffpolymer reagieren und für eine sichere Anbindung sorgen. Durch die Platzierung an der flexiblen Polymerkette und nicht wie bei einfach silanisierten Partikeln unmittelbar an der Teilchenoberfläche ist auch sterisch eine Zugänglichkeit und Reaktivität gewährleistet.
- Durch kovalent eingebundene anorganische Kerne kann der Tg des Verbundes gesteigert werden und die sprunghafte Verschlechterung der mechanischen Eigenschaften beim Überschreiten des Tg verringert werden.
- Durch Kerne mit UV-absorbierenden Eigenschaften kann die Alterungsbeständigkeit verbessert werden. (z.B. durch ZnO, $CeO_2$, $TiO_2$)
- Dem Klebstoff können IR absorbierende Eigenschaften vermittelt werden, in dem z.B: ITO (Indium-dotiertes Zinnoxid) oder ATO (Antimon-dotiertes Zinnoxid), bzw. ähnlich wirkende Zusammensetzungen als Kern verwendet werden
- Die chemische Beständigkeit des Klebstoffs kann durch den anorganischen Anteil des Kerns verbessert werden.
- Durch magnetische Kerne kann dem Klebstoff paramagnetische oder superparamagnetische Eigenschaften verliehen werden. Hier können z.B. Eisenoxide zum Einsatz kommen.
- Die Diffusion von $O_2$, Wasser oder anderen Stoffen durch den Klebstoff kann durch Core/Shell Partikel, insbesondere mit flächiger Struktur behindert/verlangsamt werden.

Unter einem "Klebstoff' wird im Rahmen der vorliegenden Erfindung ein Material verstanden, das zur vorübergehenden oder dauerhaften Verklebung von Substraten eingesetzt wird. Insbesondere werden vom Begriff "Klebstoff" im Rahmen des vorliegenden Textes Schmelzklebstoffe, Dispersionsklebstoffe, Haftklebstoffe, Schmelz-Haftklebstoffe Reaktivklebstoffe, sowie Vergußmassen und dergleichen verstanden.

Vorzugsweise enthalten erfindungsgemäße Klebstoffe als Matrixmaterial mindestens ein organisches synthetisches Polymeres/Oligomeres oder ein natürliches organisches Polymeres/Oligomeres wie es in der Natur vorkommt oder aus Naturstoffen gewinnbar ist. Ebenfalls geeignet sind im Rahmen der vorliegenden Erfindung Klebstoffe, die ein Gemisch aus einem oder mehreren organischen synthetischen Polymeren/Oligomeren und einem oder mehreren organischen Polymeren/Oligomeren aufweisen.

Zu den organischen synthetischen Polymeren/Oligomeren, wie sie im Rahmen der vorliegenden Erfindung in einer bevorzugten Ausführungsform eingesetzt werden, zählen beispielsweise Polyester, Polyether, Polyamide, Polyurethane, Polyacrylate, Polymethacrylate, Polyvinylacetat, Ethylen, Vinylacetatcopolymere, Propylen-Vinylacetatcopolymere, Styrol-Acrylatsowie Styrol-Methacrylatcopolymere und dergleichen. Alternativ können die Klebstoffe, wie oben ausgeführt, auch entsprechende Monomere als Matrixmaterial enthalten. Im Folgenden werden verschiedene Polymere näher beschrieben, wobei die jeweilige Oligomere bzw. Monomere als Matrixmaterial jeweils in dem Begriff Polymer mit umfasst sind.

Der erfindungsgemäße Klebstoff kann ein Schmelzklebstoff oder ein Dispersionsklebstoff in einer Ausbildung als Haftklebstoff oder als Kontaktklebstoff oder als Reaktivklebstoff sein.

Der erfindungsgemäße Klebstoff kann beispielsweise als Schmelzklebstoff eingesetzt werden. Unter "Schmelzklebstoffen" werden im Sinne der vorliegenden Erfindung Klebstoffe verstanden, die bei Raumtemperatur fest sowie wenigstens weitgehend wasser- und Lösemittelfrei sind. Schmelzklebstoffe werden aus der Schmelze aufgetragen und binden beim Abkühlen unter Verfestigung physikalisch ab. Als Schmelzklebstoffe sind beispielsweise organische Polymere wie Polyester, Polyurethane, Polyamide, Polyalkylenoxide oder Polymerisate, beispielsweise Ethylen-Vinylacetat Copolymere, oder Gemische aus zwei oder mehr der genannten Polymeren, oder Zubereitungen enthaltend eines der genannten Polymeren oder ein Gemisch aus zwei oder mehr davon, geeignet.

Als Schmelzklebstoff im Rahmen der vorliegenden Erfindung können beispielsweise Polyurethane eingesetzt werden.

Polyurethane, wie sie im Rahmen der vorliegenden Erfindung als Schmelzklebstoff einsetzbar sind, werden üblicherweise durch Umsetzung von mindestens einem Polyisocyanat, vorzugsweise einem Diisocyanat, und einer Polyolkomponente, die vorzugsweise überwiegend aus Diolen besteht, hergestellt. Die Polyolkomponente kann dabei nur ein Polyol enthalten, es kann jedoch auch ein Gemisch aus zwei oder mehr verschiedenen Polyolen als Polyolkomponente eingesetzt werden. Als Polyolkomponente oder zumindest als Bestandteil der Polyolkomponente sind beispielsweise Polyalkylenoxide geeignet.

Gegebenenfalls können Teile des Polyalkylenoxids durch andere ethergruppenhaltige hydrophobe Diole ersetzt werden, die Molekulargewichte von 250 bis 3.000, bevorzugt 300 bis 2.000, insbesondere von 500 bis 1.000 aufweisen. Konkrete Beispiele für solche Diole sind: Polypropylenglykol (PPG), Polybutylenglykol, Polytetrahydrofuran, Polybutadiendiol und Alkandiole mit 4 bis 44 C-Atomen. Bevorzugte hydrophobe Diole sind Polypropylenglykol, Polytetrahydrofuran mit einem Molekulargewicht von 500 bis 1.000 sowie 1, 10-Decandiol, 1,12-Dodecandiol, 1,12-Octadecandiol, Dimerfettsäurediol, 1, 2-Octandiol, 1,2-Dodecandiol, 1,2-Hexadecandiol, 1,2-Octadecandiol, 1,2-Tetradecandiol, 2-Buten-1,4-diol, 2-Butin-1,4-diol, 2,4,7,9-Tetramethyl-5-decin-4,7-diol sowie dessen Ethoxylierungsprodukte, insbesondere mit bis zu 30 Mol Ethylenoxid.

Neben den Diolen der Polyolkomponente sind Diisocyanate wesentliche Bausteine des als Schmelzklebstoff einsetzbaren Polyurethans. Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 4,4'-Diphenylmethandiisocyanat (MDI), hydriertes MDI (H12MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanato-ethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat genannt.

Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Di-isocyanatobutan, 1,12-Diisocyanatododecan und Dimerfettsäurediisocyanat.

Besonders geeignet sind: Tetramethylen-, Hexamethylen, Undecan-, Dodecamethylen, 2, 2,4-Trimethylhexan-, 1,3-Cyclohexan-, 1,4-Cyclohexan-, 1,3-bzw. 1,4-Tetramethylxylol-, isophoron-, 4,4-Dicyclohexylmethan-und Lysinesterdiisocyanat. Ganz besonders bevorzugt ist das Tetramethylxylylendiisocyanat (TMXDI), insbesondere das m-TMXDI von der Fa. Cyanamid.

Zur weiteren Erhöhung des Molekulargewichts kann beispielsweise auf bekannte Weise eine Kettenverlängerung vorgenommen werden. Hierzu werden zunächst Präpolymere mit überschüssigem Diisocyanat hergestellt, die dann anschließend mit kurzkettigen Aminoalkoholen, Diolen oder Diaminen oder mit Wasser unter Erhöhung des Molekulargewichts verlängert werden.

Vorzugsweise wird das Polyurethan jedoch in einem einstufigen Verfahren hergestellt. Dabei werden beispielsweise zunächst alle Ausgangsstoffe in Gegenwart eines organischen Lösemittels bei einem Wassergehalt von weniger als 0,5 Gew.-% gemischt. Die Mischung wird auf 80 bis 200 °C, insbesondere auf 100 bis 180 °C und vorzugsweise auf 130 bis 170 °C, für ca. 1 bis 30 Stunden erhitzt. Die Reaktionszeit kann durch Anwesenheit von Katalysatoren verkürzt werden. Insbesondere sind tertiäre Amine brauchbar, z. B. Triethylamin, Dimethylbenzylamin, Bisdimethylaminoethylether und Bis-methylaminomethylphenol. Besonders geeignet sind 1-Methylimidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylamino-pyridin, 4-Pyrrolidinopyridin, 4-Morpholinopyridin oder 4-Methylpyridin. Vorzugsweise wird jedoch ohne Katalysator gearbeitet. Auch das Lösemittel wird zweckmäßigerweise weggelassen. Unter "Lösemitteln" werden im Rahmen des vorliegenden Textes inerte organische flüssige Stoffe mit einem Siedepunkt von weniger als 200 °C bei Normaldruck verstanden.

Wenn der erfindungsgemäße Klebstoff ein Dispersionsklebstoff sein soll, so enthält er in einer bevorzugten Ausführungsform ein organisches synthetisches Polymeres ausgewählt aus der Gruppe bestehend aus Polyacrylaten, Polymethacrylaten, Polystyrol, Polyvinylestern, Ethylenvinylacetatcopolymeren oder Acrylat-Styrolcopolymeren.
In einer weiteren bevorzugten Ausführungsform der Erfindung ist der erfindungsgemäße Klebstoff ein Dispersionsklebstoff.

Wenn der erfindungsgemäße Klebstoff ein Reaktivklebstoff ist, so besteht er in einer bevorzugten Form aus mindestens 2 Komponenten, die nach inniger Vermischung miteinander chemisch reagieren, so dass ein fester Verbund (in der Regel ein Duroplast) entsteht. Typische Komponenten könnten zum Beispiel -OH, -SH, -NH, -COOH Gruppen enthaltende Polyacrylate, Polymethacrylate, Polyester, Polyether bzw. Copolymere oder entsprechende Monomere/Oligomere sein, die mit NCO-gruppenhaltigen Härtern vernetzt werden oder COOH, -SH oder-NH funktionelle Polymere/Oligomere/Monomere die mit Epoxidgruppenhaltigen Komponenten vernetzt werden.
Einkomponentige Reaktivklebstoffe enthalten vorzugsweise ungesättigte Gruppen oder Epoxidgruppen, die photochemisch nach dem Fachmann bekannten Methoden gehärtet werden können oder weisen einen den 2-komponentigen Klebstoffen entsprechenden Vernetzungsmechanismus auf, bei dem mindestens eine Komponente in einer temporär blockierten Form oder einer inaktiven Vorstufe vorliegt und zielgerichtet aktiviert werden kann.

Der erfindungsgemäße Klebstoff kann anstatt oder zusätzlich zu einem oder mehreren organischen synthetischen Polymeren, ein organisches natürliches Polymeres oder ein Gemisch aus zwei oder mehr davon enthalten. Unter einem "organischen natürlichen Polymeren" werden Polymere verstanden, wie sie durch einfache chemische Operationen aus Naturstoffen gewonnen werden können. Der Begriff beinhaltet im Rahmen der vorliegenden Erfindung weiterhin auch einfache Derivate von organischen natürlichen Polymeren, beispielsweise die Veresterungs- oder Alkoxylierungsderivate der Stärke oder der Cellulose.
In einer bevorzugten Ausführungsform der vorliegenden Erfindung enthält der erfindungsgemäße Klebstoff die Partikel in einer Menge von 0,1 bis 90 Gew.-%, vorzugsweise in einer Menge von 1 bis 30 Gew.-%, insbesondere 2 bis 20 Gew.-%.

Unabhängig von der konkreten Art des Klebstoffes enthält das Matrixmaterial ein Polymeres ausgewählt aus der Gruppe bestehend aus Polyurethanen, oder einem Gemisch aus zwei oder mehr davon, oder entsprechend polymerisierbare Monomere oder Oligomere davon oder ein ethylen-vinylacetat copolymeres oder ein gemisch aus zwei oder mehr solcher copolymeren.

Bei den Kleb- oder Dichtstoffen auf Epoxidbasis ist bevorzugt, wenn diese in zwei Komponenten vorliegen, wobei eine Komponente A aus einem oder mehreren Epoxid(en) besteht oder diese enthält und eine zweite Komponente B aus einem oder mehreren Här- ter für Epoxide besteht oder diese enthält. Unmittelbar vor der Applikation werden diese beiden Komponenten miteinander vermischt. Dabei sind im Rahmen der vorliegenden Erfindung Epoxide und Härtersysteme geeignet, die in der Technik üblicherweise als Kleb- oder Dichtstoffe eingesetzt werden. Vorzugsweise sind die Komponenten A und B so zusammensetzt, dass zur Applikation gleiche Volumina vermischt werden können.
Bei 2-Komponenten-Systemen besteht eine bevorzugte Ausführungsform darin, dass die Komponente B die erfindungsgemäß einzusetzenden Kern-Schale-Partikel enthält. Insbesondere bevorzugt ist es, wenn die Schale der Partikel mindestens zwei endständige funktionelle Gruppen trägt, die ausgewählt sind aus -OH-Gruppen, -SH-Gruppen und -NHR-Gruppen, wobei R Wasserstoff oder einen organischen Rest mit 1 bis 12 C-Atomen bedeutet. Diese funktionellen Gruppen entsprechen typischen funktionellen Gruppen in Härter-Systemen und können mit der Epoxidkomponente A unter Öffnung des Oxiranrings und Addition des organischen Moleküls reagieren.

Eine andere bevorzugte Ausführungsform besteht darin, dass die Komponente A die erfindungsgemäß einzusetzenden Kern-Schale-Partikel enthält. In dieser Variante ist es bevorzugt, wenn die Schale Epoxidgruppen als funktionelle Gruppen trägt. So können die Partikel mit den Härtermolekülen der Komponente B unter Öffnung des Oxiranrings und Addition des organischen Moleküls reagieren.

Die erfindungsgemäßen Kleb- oder Dichtstoffe können aber auch als Einkomponenten-Systeme vorliegen, die Epoxidharze und aktivierbare oder latente Härter enthalten.

Als Epoxidharze eignet sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden können. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4- Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure. Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten. Dabei werden in der Regel Mischungen aus flüssigen und festen Epoxidharzen eingesetzt, wobei die flüssigen Epoxidharze vorzugsweise auf der Basis des Bisphenols A sind und ein hinreichend niedriges Molekulargewicht aufweisen. Insbesondere werden bei Raumtemperatur flüssige Epoxidharze eingesetzt, die in der Regel ein EpoxidÄquivalentgewicht von 150 bis etwa 220 haben, besonders bevorzugt ist ein Epoxid-Äquivalentgewichtbereich von 182 bis 192.

Als thermisch aktivierbare oder latente Härter für das Epoxidharz im Falle der Einkomponenten-Systeme können Guanidine, substituierte Guanidine, substituierte Harnstoffe, Melaminharze, Guanamin-Derivate, cyclische tertiäre Amine, aromatische Amine und/oder deren Mischungen eingesetzt werden. Zusätzlich zu oder anstelle von den vorgenannten Härtern können katalytisch wirksame substituierte Harnstoffe eingesetzt werden.

Die erfindungsgemäßen Klebstoffe lassen sich einerseits als einkomponentige Klebstoffe formulieren, wobei diese sowohl als hochviskose warm applizierbare Klebstoffe formuliert werden können, als auch als thermisch härtbare Schmelzklebstoffe. Weiterhin können diese Klebstoffe als einkomponentige vorgelierbare Klebstoffe formuliert werden, im letztgenannten Fall enthalten die Zusammensetzungen entweder feinteilige thermoplastische Pulver, wie z. B. Polymethacrylate, Polyvinylbutyral oder andere thermoplastische (Co)polymere oder das Härtungssystem ist so abgestimmt, dass ein zweistufiger Härtungsprozess stattfindet, wobei der Gelierungsschritt nur eine teilweise Aushärtung des Klebstoffes bewirkt und die Endaushärtung im Fahrzeugbau z. B. in einem der Lackieröfen, vorzugsweise im KTL-Ofen, stattfindet.

Die erfindungsgemäßen Klebstoffzusammensetzungen können auch als zweikomponentige Epoxy-Klebstoffe formuliert werden, bei denen die beiden Reaktionskomponenten erst kurz vor der Applikation miteinander vermischt werden, wobei die Aushärtung dann bei Raumtemperatur oder mäßig erhöhter Temperatur stattfindet. Als zweite Reaktionskomponente können hierbei die für zweikomponentige Epoxy-Klebstoffe an sich bekannten Reaktionskomponenten eingesetzt werden, beispielsweise Dioder Polyamine, aminoterminierte Polyalkylenglycole oder Polyaminoamide.

Weiterhin können die erfindungsgemäßen Klebstoffzusammensetzungen gängige weitere Hilfs- und Zusatzmittel wie z. B. Weichmacher, Reaktivverdünner, Rheologie-Hilfsmittel, Netzmittel, Alterungsschutzmittel, Stabilisatoren und/oder Farbpigmente enthalten.

Der erfindungsgemäße Klebstoff enthält das Matrixmaterial üblicherweise in einer Menge von mindestens etwa 10 Gew.-%. Wenn der erfindungsgemäße Klebstoff als Schmelzklebstoff eingesetzt werden soll, so ist es vorteilhaft, wenn er mindestens ein Matrixmaterial in einer größeren Menge enthält, beispielsweise mindestens etwa 50 Gew.-%.

Ebenfalls als Klebstoffe im Rahmen der vorliegenden Erfindung geeignet sind Schmelzklebstoffe, die nachvernetzende Gruppen aufweisen, wie sie üblicherweise zur Herstellung besonders wärmestandfester Verklebungen eingesetzt werden. Hierbei eignet sich insbesondere der Einsatz von Polyurethanen als synthetisches organisches Polymeres.

Bei dem erfindungsgemäßen Klebstoff kann es sich weiterhin um einen Heißsiegelklebstoff handeln. Unter "mindestens ein organisches Polymeres und Kern-Schale-Partikel umfassend Heißsiegelklebstoffen" werden wärmeaktivierbare Klebstoffe verstanden, die als Lösung, Emulsion, Dispersion oder Schmelze auf die Oberfläche der zu

versiegelnden Substrate aufgebracht werden. Dort binden sie zunächst infolge des Verdampfens der Lösemittel oder durch abkühlen zu einem nicht-klebrigen Klebstofffilm ab. Die anschließende Verklebung der Substrate erfolgt in der Regel nach deren Zusammenfügen und Zusammenpressen durch Erwärmen in Heizpressen oder im Hochfrequenzfeld. Bei Abkühlen erfolgt unter Verfestigung der mindestens ein organisches Polymeres und Kern-Schale-Partikel umfassend Heißsiegelklebstoffschicht das Verkleben der Werkstücke. Besonders geeignet zum Einsatz in Mindestens ein organisches Polymeres und Kern-Schale-Partikel umfassend Heißsiegelklebstoffen sind beispielsweise Copolymere auf der Basis von Ethylen, (Meth)acrylaten, Vinylchlorid, Vinylidenchlorid, Vinylacetat sowie Polyamide, Polyester und Polyurethane.

Beim erfindungsgemäßen Klebstoff kann es sich weiterhin um einen Haftklebstoff handeln. Haftklebstoffe sind in der Regel viskoelastische Klebstoffe, die in Lösemittelfreier Form bei 20°C permanent klebrig sind und klebfähig bleiben und bei geringer Substratspezifität bei leichtem Anpressdruck sofort auf fast allen Substraten haften. Mit Haftklebstoffen hergestellte Klebeverbunde können meist ohne Zerstörung der verklebten Substrate gelöst werden. Im Rahmen der vorliegenden Erfindung enthalten Haftklebstoffe als organisches synthetisches Polymeres beispielsweise Natur- und Synthesekautschuke, Polyacrylate, Polyester, Polychloroprene, Polyisobutene, Polyvinylether und Polyurethane. Gegebenenfalls können die Haftklebstoffe noch Zusätze enthalten, die beispielsweise eine einseitige Wiederablösbarkeit von Papieroberflächen begünstigen.

In einer weiteren bevorzugten Ausführungsform der Erfindung ist der erfindungsgemäße Klebstoff ein Dispersionsklebstoff. Als "Dispersionsklebstoffe" werden meistens wässrige Dispersionen von organischen Polymeren bezeichnet, die geeignet sind, Holz, Papier, Pappe, Tapeten, Leder, Filz, Kork, Textilien, Kunststoffe oder Metalle zu verkleben. Dispersionsklebstoffe binden durch Verdunsten des Dispersionsmittels (Wasser) unter Bildung eines Klebstofffilms ab. Als synthetische organische Polymere in Dispersionsklebstoffen geeignet sind beispielsweise Polyacrylate, Polymethacrylate, Polyurethane, Polyester, Polyvinylacetale, Ethylen-Vinylacetatcopolymere (EVA) und dergleichen.

Zusätzlich zu den genannten organischen synthetischen oder natürlichen Polymeren kann der erfindungsgemäße Klebstoff noch weitere Zusatzstoffe enthalten, die beispielsweise die Klebeigenschaften, das Alterungsverhalten, den Abbindevorgang oder die Adhäsion beeinflussen.

So kann der Klebstoff beispielsweise sogenannte Tackifier-Harze enthalten, die sich in der Regel in natürliche und synthetische (Kunstharze) unterteilen lassen. Hierzu zählen beispielsweise Alkydharze, Epoxydharze, Melaminharze, Phenolharze, Urethanharze, Kohlenwasserstoffharze sowie natürliche Harze wie Colophonium, Holzterpentinöl und Talloel. Zu den synthetischen Harzen zählen Kohlenwasserstoffharze, Ketonharze, Cumaronindenharze, Isocyanatharze und Terpen-Phenolharze. Weiterhin können die erfindungsgemäßen Klebstoffe Lösemittel enthalten. Als Lösemittel geeignet sind beispielsweise ein oder mehrwertige Alkohole mit etwa 2 bis etwa 10 C-Atomen.

Weiterhin können die erfindungsgemäßen Klebstoffe Entschäumer enthalten. Als Entschäumer geeignet sind beispielsweise Entschäumer auf Fettalkoholbasis oder auf Silikonbasis.

Weiterhin können die Klebstoffe Schutzkolloide wie Polyvinylpyrrolidone, Polyvinylalkohole, Cellulose oder Cellulosederivate enthalten.

Weiterhin kann der erfindungsgemäße Klebstoff als Zusatzstoffe Stabilisatoren oder Antioxidantien enthalten. Hierzu zählen in der Regel Phenole, sterisch gehinderte Phenole hohen Molekulargewichts, polyfunktionelle Phenole, schwefel- und phosphorhaltige Phenole oder Amine. Als Stabilisatoren geeignet sind beispielsweise Hydrochinon, Hydrochinonmethylether 2,3-(Di-tert.-butyl)hydrochinon, 1,3,5-Trimethyl-2, 4,6-tris(3,5-di-tert-butyl-4-hydroxybenzyl)benzol; Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylenbis(2,6-di-tert-butyl-phenol) ; 4,4-Thiobis(6-tert-butyl-o-cresol); 2,6-Di-tert-butylphenol; 6-(4-Hydroxyphenoxy)-2,4-bis(n-octylthio)-1,3,5-triazin; Di-n-Octadecyl-3,5-di-tert-butyl-4-hydroxybenzylphosphonate; 2-(n-Octylthio) ethyl-3,5-di-tert-butyl-4-hydroxybenzoat; und Sorbithexa[3-(3,5-di-tert-butyl-4-hydroxyphenyl)propionat]; sowie p-Hydroxydiphenylamin oder N,N'-Diphenylendiamin oder Phenothiazin. Der erfindungsgemäße Klebstoff kann weiterhin Weichmacher wie Benzoatweichmacher, Phosphatweichmacher, flüssige Harzderivate oder pflanzliche und tierische Öle enthalten. Geeignet sind beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly (ethylenglykol), flüssige Harzderivate, beispielsweise die Methylester von hydriertem Harz, pflanzliche und tierische Öle, beispielsweise Glycerinester von Fettsäuren und deren Polymerisationsprodukte.

Ebenfalls geeignet sind Weichmacher auf Basis von Phthalsäure, insbesondere die Alkylphthalate.

Der erfindungsgemäße Klebstoff kann weiterhin Farbstoffe wie Titandioxid, Füllstoffe wie Talkum, Ton und dergleichen sowie Pigmente enthalten. Wenn es sich bei dem erfindungsgemäßen Klebstoff um einen beispielsweise durch Einfluss von Elektronenstrahlen oder UV-Strahlen nachvernetzenden Klebstoff handelt, können im Klebstoff noch Fotoinitiatoren als Zusatzstoffe vorhanden sein. Beispielsweise kann es sich dabei um Norrish-Type I fragmentierende Substanzen handeln wie Benzophenon, Hydrochinon, Fotoinitiatoren der Irgacure®-, Darocure®- oder Speedcure®-Reihe (Hersteller: Ciba-Geigy) handeln. Gegebenenfalls kann der erfindungsgemäße Klebstoff einen monofunktionellen Reaktiwerdünner enthalten, der beispielsweise durch Bestrahlung mit UV-Licht oder mit Elektronenstrahlen polymerisierbar ist. Hierzu eignen sich insbesondere die entsprechenden Ester der Acrylsäure oder Methacrylsäure. Beispiel für solche Ester sind u.a. N-Butylacrylat, 2-Ethylhexylacrylat, 3-Methoxybutylacrylat, 2-Phenoxyethylacrylat, Benzylacrylat oder 2-Methoxypropylacrylat.

Weiterhin können die erfindungsgemäßen Klebstoffe Emulgatoren oder Stabilisatoren oder deren Gemisch enthalten. Als Emulgatoren eignen sich in der Regel Tenside, die eine hydrophile und eine hydrophobe Gruppe aufweisen. Es kann sich dabei um anionische Emulgatoren, kationische Emulgatoren oder amphotere Emulgatoren handeln. Geeignet sind beispielsweise Kohlenwasserstoffemulgatoren mit etwa 6 bis etwa 22 -Kohlenstoffatomen,-wobei die Kohlenwasserstoffkette verzweigt, unverzweigt, gesättigt, ungesättigt, substituiert, aliphatisch oder aromatisch sein kann.
Im Rahmen der Herstellung der erfindungsgemäßen Klebstoffe werden das organische synthetische Polymere oder das organische natürliche Polymere oder das Gemisch aus einem oder mehreren organischen synthetischen Polymeren und einem oder mehreren organischen natürlichen Polymeren mit den Kern-Schale-Partikeln und ggf. einem Lösemittel und weiteren Zusatzstoffen vermischt. Wenn der erfindungsgemäße Klebstoff ein Schmelzklebstoff sein soll, so kann die Vermischung in der Schmelze des Schmelzklebstoffs erfolgen, es ist jedoch ebenso möglich, die Kern-Schale-Partikel bereits bei der Herstellung des als Schmelzklebstoff eingesetzten Polymeren zuzugeben.
Soll der erfindungsgemäße Klebstoff ein Dispersionsklebstoff sein, so lassen sich die Kern-Schale-Partikel direkt in die Polymerdispersion des Dispersionsklebstoffs einarbeiten.
In einer weiteren bevorzugten Ausführungsform der Erfindung werden die Kern-Schale-Partikel in einen erfindungsgemäßen Dispersionsklebstoff bereits vor der Herstellung des synthetischen organischen Polymeren zugegeben. Der erfindungsgemäße Dispersionsklebstoff wird hierbei durch eine Emulsionspolymerisation hergestellt, bei der üblicherweise Tröpfchen aus Monomeren, die zur Herstellung des späteren Polymeren erforderlich in einer wässrigen Emulsion polymerisiert werden. Die Kern-Schale-Partikel können bereits vor der Polymerisation in die Emulsion zugegeben werden, was zu einer besonders homogenen Verteilung der Kern-Schale-Partikel im Dispersionsklebstoff führt.

Ein weiterer Gegenstand der Erfindung ist daher ein Verfahren zur Herstellung eines Klebstoffs, dadurch gekennzeichnet, dass ein Polymeres, Kern-Schale-Partikel und ggf. Lösemittel oder weitere Zusatzstoffe vermischt werden.
Ebenfalls Gegenstand der vorliegenden Erfindung ist die Verwendung von Kern-Schale-Partikel in Klebstoffen bzw. als Zuschlagstoff zu Klebstoffen.

Die Polymer/Oligomer-Ketten der Schale können, wie in PCT/EP 2008/000532 beschrieben, hergestellt werden. Dies kann eine Polymerisation von einem Kernelement weg sein, oder die Reaktion von entsprechend reaktiv modifizierten Polymer/Oligomerketten mit einem Kern. Dazu eignen sich vorzugsweise einseitig endständig modifizierte Polymer/Oligomerketten oder auch Polymer/Oligomerketten, die nur eine bezüglich des Kernmaterials reaktive Gruppe aufweisen. Weiterhin ist es möglich die Kerne aus entsprechend modifizierten Oligomeren/Polymeren durch eine geeignete Reaktion (z.B. Hydrolyse/Polykondensation) herzustellen. Dazu eignen sich bevorzugt endständig kovalent angebundene hydrolysierbare Siliziumverbindungen, wie z.B: Trimethoxyorganosilane.

Die so hergestellten Partikel weisen eine sehr vorteilhafte, Stern-ähnliche Struktur auf. Durch die Stern-ähnliche Struktur wird ein sehr positives Viskositätsverhalten der Nano-Hybrid Klebstoff erzielt. Da die Polymerketten durch einen zentralen Verknüpfungspunkt zusammengehalten werden, ist die Ausbildung von großen, frei entfalteten Polymerketten, wie es in einer herkömmlichen Polymerlösung der Fall ist, unterbunden. Dadurch können Polymerknäuel mit sehr hohem Molekulargewicht hergestellt werden, die in Lösung eine im Vergleich zu herkömmlichen Polymeren gleichen Molekulargewichts niedrigere Viskosität aufweisen.

Erfindungsgemäße Partikel weisen Kerne mit einem Durchmesser im Bereich von 1 nm bis 1 $\mu$m auf, wobei die Kerne anorganisch oder organisch oder ein Gemisch aus anorganischen oder organischen Bestandteilen umfassen können. Vorzugsweise sind die Kerne anorganisch.

Die Durchmesser können mittels eines Malvern ZETASIZER (Partikel-Korrelations-Spektroskopie, particle correlation spectroscopy, PCS) bzw. Transmissionselektronenmikroskops bestimmt werden.

Besonders bevorzugt sind weitgehend runde Kerne eines Durchmessers von 1 bis 25 nm, insbesondere 1 bis 10 nm. Weitgehend rund im Sinne der vorliegenden Erfindung schließt dabei ellipsoide und unregelmäßig geformte Kerne mit ein. In speziellen, ebenfalls bevorzugten Ausführungsformen der vorliegenden Erfindung, ist die Verteilung der Teilchengrößen eng, d.h. die Schwankungsbreite beträgt weniger als 100 % des Mittelwertes, insbesondere bevorzugt maximal 50 % des Mittelwertes.
Weiterhin sind plättchenförmige Partikel im Dickenbereich von 1-500 nm, bevorzugt, wie sie z.B. in Form von natürlichen oder künstlichen Schichtsilikaten bekannt sind.

Geeignete Kerne können separat oder in einem vorgeschalteten Schritt hergestellte Nanoteilchen sein, wie sie dem Fachmann wohlbekannt sind, wie z.B: $SiO_2$, $ZrO_2$, $TiO_2$, $CeO_2$, ZnO, usw. aber auch 3-dimensional vernetzte Organosesqisiloxanstrukturen und Metalloxiden/-hydroxide, insbesondere Silsesquioxanstrukturen (beispielsweise unter dem Markennamen POSS™ der Fa. Hybrid Plastics bekannt), oder Heteropolysiloxane besonders kubische oder andere 3-dimensionale Vertreter dieser Materialklasse. Hybride aus Nanoteilchen und Silsesquioxanstrukturen sind

ebenfalls als Kerne einsetzbar. Des Weiteren können prinzipiell Kerne auf Basis von Schichtsilikaten, Sulfaten, Silikaten, Carbonaten, Nitriden, Phosphaten, Sulfiden mit entsprechender Größe eingesetzt werden. Ein weiteres geeignetes Kernmaterial sind Kerne ausgewählt aus organischen Polymeren/Oligomeren, insbesondere organische Nanoteilchen, beispielsweise bestehend aus radikalisch polymerisierten Monomeren. Dendrimere oder Hyperbranched Polymers können prinzipiell ebenfalls als Kernmaterial dienen.
Der Kern kann darüber hinaus auch in situ aus geeigneten Polymerketten aufgebaut werden. Dazu sind vorzugsweise endständig reaktiv modifizierte Polymere geeignet, die in einem Verknüpfungsschritt den Kern oder maßgebliche Teile des Kerns ausbilden. Hierzu bieten sich vor allem Alkoxysilan-modifizierte Polymerketten an, besonders bevorzugt Trialkoxysilan-modifizierte. Die Kernbildung bei diesen Polymeren erfolgt bevorzugt unter Reaktionsbedingungen, die zur Bildung von kugelförmigen Strukturen geeignet sind. Bei der Silanmodifizierung sind das vor allem basische Reaktionsbedingungen, vergleichbar mit der dem Fachmann bekannten Stöber-Synthese. Neben Alkoxysilanen können selbstverständlich auch andere geeignete Metallverbindungen, z. B. von Ti, Zr, Al eingesetzt werden und unter für die jeweilige Spezies optimalen Bedingungen reagiert werden. Die Reaktion kann auch in Gegenwart eines bereits gebildeten Templats (Keim, Kern-Schale-Partikel, etc) oder anderer Reaktionspartner (Silane, Metallalkoxide, Salze) durchgeführt werden, um das erfindungsgemäße Ziel zu erreichen.

Die Kerne werden ausgewählt aus der Gruppe bestehend aus hydrophilen und hydrophoben, insbesondere hydrophilen, Kernen auf der Basis von Sulfaten oder Carbonaten von Erdalkaliverbindungen oder von Oxiden bzw. Hydroxiden von Silizium, Titan, Zink, Aluminium, Cer, Cobalt, Chrom, Nickel, Eisen, Yttrium oder Zirkonium oder Mischungen hieraus, die optional mit Metall-Oxiden bzw. -Hydroxiden, beispielsweise von Silizium, Zirkonium, Titan, Aluminium beschichtet sein können oder mit Metall-Oxiden bzw. -Hydroxiden, beispielsweise von Silizium, Zirkonium, Titan, Aluminium, beschichteten Metallen, wie beispielsweise Ag, Cu, Fe, Au, Pd, Pt oder Legierungen. Die einzelnen Oxide können auch als Gemische vorliegen. Vorzugsweise ist das Metall des Metall-Oxids bzw. -Hydroxids Silizium.
Besonders bevorzugt sind die Kerne ausgewählt aus $SiO_2$-Partikeln, oder sie sind ausgewählt aus ZnO- oder Ceroxid-Partikeln oder $TiO_2$-Partikeln, die optional mit Metall-Oxiden bzw. -Hydroxiden, beispielsweise von Silizium, Zirkonium, Titan, Aluminium, beschichtet sein können.

Im Falle von ZnO- oder Ceroxid-Partikeln als Kerne können die erfindungsgemäßen Klebstoffe auf Grund der Absorptionseigenschaften von Zinkoxid oder Ceroxid als UV-absorbierende Klebstoffe eingesetzt werden. Geeignete Zinkoxid-Partikel mit einer Partikelgröße von 3 bis 50 nm sind beispielsweise erhältlich durch ein Verfahren bei dem in einem Schritt a) ein oder mehrere Precursoren für die ZnO-Kern-Schale-Partikel in einem organischen Lösungsmittel zu den Kern-Schale-Partikeln umgesetzt werden, und in einem Schritt b) das Wachstum der Kern-Schale-Partikel durch Zugabe von mindestens einem Modifikator, der Precursor für Silica ist, beendet wird, wenn im UVNIS Spektrum der Reaktionslösung die Absorptionskante den gewünschten Wert erreicht hat. Das Verfahren sowie die geeigneten Modifikatoren und Verfahrensparameter sind in DE 10 2005 056622 beschrieben.

Alternativ lassen sich geeignete Zinkoxid-Partikel herstellen durch ein Verfahren, bei dem in einem Schritt a) ein oder mehrere Precursoren für die ZnO-Kern-Schale-Partikel in einem organischen Lösungsmittel zu den Kern-Schale-Partikeln umgesetzt werden, und in einem Schritt b) das Wachstum der Kern-Schale-Partikel durch Zugabe mindestens eines Copolymeren aus mindestens einem Monomer mit hydrophoben Resten und mindestens einem Monomer mit hydrophilen Resten beendet wird, wenn im UVNIS Spektrum der Reaktionslösung die Absorptionskante den gewünschten Wert erreicht hat. Dieses Verfahren sowie die geeigneten Copolymere, Monomere und Verfahrensparameter sind in DE 10 2005 056621 beschrieben.

Es können auch Nanohektorite, die beispielsweise von der Firma Südchemie unter der Marke Optigel® oder von der Firma Laporte unter der Marke Laponite® vertrieben werden, verwendet werden. Ganz besonders bevorzugt sind auch Kieselsole ($SiO_2$ in Wasser), hergestellt aus ionengeiauschtem Wasserglas (z.B. Levasile® der Fa. H.C: Starck) oder Dispersionen von aus der Gasphase abgeschiedenen Partikeln wie z.B: Aerosil® von Degussa oder Nanopure® der Fa. SDC oder Filterstäube aus der Aluminium- oder Siliziumfertigung, wie z.B. die von der Firma Elkem unter dem Namen "Sidistar" vertriebenen $SiO_2$-Produkte.

Falls der Kern nicht schon eine hohe Reaktivität und die Möglichkeit zur Ausbildung von kovalenten Bindungen mit den Oligomeren/Polymeren aufweist, ist es vorteilhaft, einen Haftvermittler oder eine andere geeignete Oberflächenmodifikation aufzubringen. Demgemäss ist in einer weiteren Ausführungsform der vorliegenden Erfindung die Oberfläche der Kerne mit mindestens einem Oberflächenmodifizierungsmittel modifiziert. Dies sind z.B. organofunktionelle Silane, metallorganische Verbindungen, wie z.B. Zirkon-tetra-n-propylat, bzw. Gemische oder mehrfachfunktionelle organische Moleküle, die optimierte Reaktivität gegenüber dem Kernmaterial und den damit zu verbindenden Oligomeren/Polymeren aufweisen. Vorzugsweise handelt es sich um eine chemische Oberflächenmodifizierung, das heißt die Anbindung erfolgt über Wasserstoffbrückenbindungen, elektrostatische Wechselwirkungen, Chelatbindungen oder über kovalente Bindungen. Vorzugsweise ist das Oberflächenmodifizierungsmittel kovalent an die Oberfläche des Kerns gebunden. Vorzugsweise ist das mindestens eine Oberflächenmodifizierungsmittel ausgewählt aus der Gruppe umfassend organofunktionelle Silane, quartäre Ammoniumverbindungen, Carbonsäuren, Phosphonate, Phosphonium- und Sulfoniumverbindungen oder Gemische hieraus. Insbesondere bevorzugt weist mindestens ein Oberflächenmodifizierungsmittel mindestens eine funktionelle Gruppe ausgewählt aus der Gruppe umfassend Thiole, Sulfide, Disulfide oder Polysulfide auf.

Gängige Verfahren zur Herstellung oberflächenmodifizierter Kern-Schale-Partikel gehen von wässrigen Teilchendispersionen aus, denen das Oberflächenmodifizierungsmittel zugesetzt wird. Die Umsetzung mit den Oberflächenmodifizierungsmitteln kann aber auch in einem organischen Lösungsmittel oder in Lösungsmittelgemischen durchgeführt werden. Dies gilt insbesondere für ZnO-Kern-Schale-Partikel. Bevorzugte Lösungsmittel sind Alkohole oder Ether, wobei die Verwendung von Methanol, Ethanol, Diethylether, Tetrahydrofuran und/oder Dioxan oder Mischungen davon insbesondere bevorzugt ist. Als besonders geeignetes Lösungsmittel hat sich dabei Methanol erwiesen. Bei der Umsetzung können gegebenenfalls auch Hilfsstoffe zugegen sein, wie z.B. Tenside oder Schutzkolloide (z.B. Hydroxypropylcellulose). Die Oberflächenmodifizierungsmittel können alleine, als Gemische oder im Gemisch mit weiteren, ggf. nichtfunktionellen Oberflächenmodifizierungsmitteln eingesetzt werden. Die beschriebenen Anforderungen an Oberflächenmodifizierungsmittel erfüllt insbesondere erfindungsgemäß ein Haftvermittler, der zwei oder mehr funktionelle Gruppen trägt. Eine Gruppe des Haftvermittlers reagiert chemisch mit der Oxidoberfläche des Kern-Schale-Partikels. Hier kommen insbesondere Alkoxysilylgruppen (z.B. Methoxy-, Ethoxysilane), Halogensilane (z.B. Chlor-) oder saure Gruppen von Phosphorsäureestern- bzw. Phosphonsäuren und Phosphonsäureestern oder Carbonsäuren in Betracht. Über einen mehr oder weniger langen Spacer sind die beschriebenen Gruppen mit einer zweiten, funktionellen Gruppe verknüpft. Bei diesem Spacer handelt es sich um unreaktive Alkylketten, Siloxane, Polyether, Thioether oder Urethane bzw. Kombinationen dieser Gruppierungen der allgemeinen Formel $(C,Si)_nH_m(N,O,S)_x$ mit n=1-50, m=2-100 und x=0-50. Bei der funktionellen Gruppe handelt es sich vorzugsweise um Thiol-, Sulfid- Polysulfid-, insbesondere Tetrasulfid-, oder Disulfidgruppen. Neben den Thiol-, Sulfid-, Polysulfid- oder Disulfidgruppen kann der oben beschriebene Haftvermittler weitere funktionelle Gruppen aufweisen. Bei den zusätzlichen funktionellen Gruppen handelt es sich insbesondere um Acrylat-, Methacrylat-, Vinyl-, Amino-, Cyano-, Isocyanat-, Epoxy-, Carboxy- oder Hydroxygruppen.

Oberflächenmodifizierungsmittel auf Silanbasis sind beispielsweise in DE 40 11 044 C2 beschrieben. Oberflächenmodifizierungsmittel auf Phosphorsäurebasis sind u.a. als Lubrizol® 2061 and 2063 von der Firma LUBRIZOL (Fa. Langer&Co.) erhältlich. Ein geeignetes Silan ist beispielsweise Mercaptopropyltrimethoxysilan. Dieses und weitere Silane sind kommerziell z.B. bei ABCR GmbH & Co., Karlsruhe, oder der Firma Degussa, Deutschland unter dem Markennamen Dynasilan, erhältlich. Auch Mercaptophosphonsäure bzw. Mercaptophosphonsäurediethylester können als Haftvermittler hier aufgeführt werden.

Alternativ kann es sich bei dem Oberflächenmodifizierungsmittel um amphiphile Silane gemäß der allgemeinen Formel $(R)_3S_i\text{-}S_p\text{-}A_{hp}\text{-}B_{hb}$, wobei die Reste R gleich oder verschieden sein können und hydrolytisch abspaltbare Reste darstellen, $S_P$ entweder -O- oder geradkettiges oder verzweigtes Alkyl mit 1-18 C-Atomen, geradkettiges oder verzweigtes Alkenyl mit 2-18 C-Atomen und einer oder mehreren Doppelbindungen, geradkettiges oder verzweigtes Alkinyl mit 2-18 C-Atomen und einer oder mehreren Dreifachbindungen, gesättigtes, teilweise oder vollständig ungesättigtes Cycloalkyl mit 3-7 C-Atomen, das mit Alkylgruppen mit 1-6 C-Atomen substituiert sein kann bedeutet, $A_{hp}$ einen hydrophilen Block bedeutet, $B_{hb}$ einen hydrophoben Block bedeutet und wobei mindestens eine Thiol-, Sulfid- oder Disulfidgruppe an $A_{hp}$ und/oder $B_{hb}$ gebunden vorliegt, handelt. Bei Verwendung von amphiphilen Silanen werden Kern-Schale-Partikel erhalten, die sich besonders gut redispergieren lassen, sowohl in polaren als auch in unpolaren Lösungsmitteln.

Die amphiphilen Silane enthalten eine Kopfgruppe $(R)_3Si$, wobei die Reste R gleich oder verschieden sein können und hydrolytisch abspaltbare Reste darstellen. Vorzugsweise sind die Reste R gleich.
Geeignete hydrolytisch abspaltbare Reste sind beispielsweise Alkoxygruppen mit 1 bis 10 C-Atomen, vorzugsweise mit 1 bis 6 C-Atomen, Halogene, Wasserstoff, Acyloxygruppen mit 2 bis 10 C-Atomen und insbesondere mit 2 bis 6 C-Atomen oder $NR'_2$-Gruppen, wobei die Reste R' gleich oder verschieden sein können und ausgewählt sind aus Wasserstoff oder Alkyl mit 1 bis 10 C-Atomen, insbesondere mit 1 bis 6 C-Atomen. Geeignete Alkoxygruppen sind beispielsweise Methoxy-, Ethoxy-, Propoxy- oder Butoxygruppen. Geeignete Halogene sind insbesondere Br und Cl. Beispiele für Acyloxygruppen sind Acetoxy oder Propoxygruppen. Weiterhin eignen sich auch Oxime als hydrolytisch abspaltbare Reste. Die Oxime können hierbei mit Wasserstoff oder beliebigen organischen Resten substituiert sein. Vorzugsweise handelt es sich bei den Resten R um Alkoxygruppen und insbesondere um Methoxy- oder Ethoxygruppen.

An die oben genannte Kopfgruppe ist ein Spacer $S_P$ kovalent gebunden, der als Bindeglied zwischen der Si-Kopfgruppe und dem hydrophilen Block $A_{hp}$ fungiert und im Rahmen der vorliegenden Erfindung eine Brückenfunktion wahrnimmt. Die Gruppe $S_P$ ist entweder -O- oder geradkettiges oder verzweigtes Alkyl mit 1-18 C-Atomen, geradkettiges oder verzweigtes Alkenyl mit 2-18 C-Atomen und einer oder mehreren Doppelbindungen, geradkettiges oder verzweigtes Alkinyl mit 2-18 C-Atomen und einer oder mehreren Dreifachbindungen, gesättigtes, teilweise oder vollständig ungesättigtes Cycloalkyl mit 3-7 C-Atomen, das mit Alkylgruppen mit 1-6 C-Atomen substituiert sein kann.

Die $C_1$-$C_{18}$-Alkylgruppe von $S_P$ ist beispielsweise eine Methyl-, Ethyl-, Isopropyl-, Propyl-, Butyl-, sek.-Butyl- oder tert.-Butyl-, ferner auch Pentyl-, 1-, 2- oder 3-Methylbutyl-, 1,1-, 1,2- oder 2,2-Dimethylpropyl-, 1-Ethylpropyl-, Hexyl-, Heptyl-, Octyl-, Nonyl-, Decyl-, Undecyl-, Dodecyl-, Tridecyl- oder Tetradecylgruppe. Gegebenenfalls kann sie perfluoriert sein, beispielsweise als Difluormethyl-, Tetrafluorethyl-, Hexafluorpropyl- oder Octafluorbutylgruppe.
Ein geradkettiges oder verzweigtes Alkenyl mit 2 bis 18 C-Atomen, wobei auch mehrere Doppelbindungen vorhanden sein können, ist beispielsweise Vinyl, Allyl, 2- oder 3-Butenyl, Isobutenyl, sek.-Butenyl, ferner 4-Pentenyl, iso-Pentenyl,

Hexenyl, Heptenyl, Octenyl, $C_9H_{16}$, $-C_{10}H_{18}$ bis $-C_{18}BH_{34}$, vorzugsweise Allyl, 2- oder 3-Butenyl, Isobutenyl, sek.-Butenyl, ferner bevorzugt ist 4-Pentenyl, iso-Pentenyl oder Hexenyl.

Ein geradkettiges oder verzweigtes Alkinyl mit 2 bis 18 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, $-C_9H_{14}$, $-C_{10}H_{16}$ bis $-C_{18}H_{32}$, vorzugsweise Ethinyl, 1- oder 2-Propinyl, 2- oder 3-Butinyl, 4-Pentinyl, 3-Pentinyl oder Hexinyl.

Unsubstituierte gesättigte oder teilweise oder vollständig ungesättigte Cycloalkylgruppen mit 3-7 C-Atomen können Cyclopropyl-, Cyclobutyl-, Cyclopentyl-, Cyclohexyl-, Cycloheptyl-, Cyclopentenyl-, Cyclopenta-1,3-dienyl-, Cyclohexenyl-, Cyclohexa-1,3-dienyl-, Cyclohexa-1,4-dienyl-, Phenyl-, Cycloheptenyl-, Cyclohepta-1,3-dienyl-, Cyclohepta-1,4-dienyloder Cyclohepta-1,5-dienylgruppen sein, welche mit $C_1$- bis $C_6$-Alkylgruppen substituiert.

An die Spacergruppe $S_P$ schließt sich der hydrophile Block $A_{hp}$ an. Dieser kann ausgewählt sein aus nichtionischen, kationischen, anionischen oder zwitterionischen hydrophilen Polymeren, Oligomeren oder Gruppen. In der einfachsten Ausführungsform handelt es sich bei dem hydrophilen Block um Ammonium-, Sulfonium-, Phosphoniumgruppen, Alkylketten mit Carboxyl-, Sulfat- und Phosphat-Seitengruppen, wobei diese auch als entsprechendes Salz vorliegen können, teilveresterte Anhydride mit freier Säure- oder Salzgruppe, OH-substituierte Alkyl- oder Cycloalkylketten (z.B. Zucker) mit mindestens einer OH-Gruppe, NH-und SH-substituierte Alkyloder Cycloalkylketten oder Mono-, di-tri- oder oligo-Ethylenglycolgruppen. Die Länge der entsprechenden Alkylketten kann 1 bis 20 C-Atome, vorzugsweise 1 bis 6 C-Atome betragen.

Die nicht ionischen, kationischen, anionischen oder zwitterionischen hydrophilen Polymere, Oligomere oder Gruppen sind dabei aus entsprechenden Monomeren durch Polymerisation nach dem für den Fachmann allgemein bekannten Methoden herstellbar. Geeignete hydrophile Monomere enthalten dabei mindestens eine dispergierende funktionelle Gruppe, die aus der Gruppe bestehend aus

(i) funktionellen Gruppen, die durch Neutralisationsmittel in Anionen überführt werden können, und anionischen Gruppen, und/oder

(ii) funktionellen Gruppen, die durch Neutralisationsmittel und/oder Quarternisierungsmittel in Kationen überführt werden können, und kationischen Gruppen, und/oder

(iii) nichtionischen hydrophilen Gruppen.

Vorzugsweise werden die funktionellen Gruppen (i) aus der Gruppe, bestehend aus Carbonsäure-, Sulfonsäure- and Phosphonsäuregruppen, sauren Schwefelsäure- and Phosphorsäureestergruppen sowie Carboxylat-, Sulfonat-, Phosphonat-, Sulfatester- und Phosphatestergruppen, die funktionellen Gruppen (ii) aus der Gruppe, bestehend aus primären, sekundären and tertiären Aminogruppen, primären, sekundären, tertiären und quaternären Ammoniumgruppen, quaternären Phosphoniumgruppen und tertiären Sulfoniumgruppen, und die funktionellen Gruppen (iii) aus der Gruppe, bestehend aus omega-Hydroxy- and omega-Alkoxy-poly(alkylenoxid)-1-yl-Gruppen, ausgewählt.

Sofern nicht neutralisiert, können die primären und sekundären Aminogruppen auch als isocyanatreaktive funktionelle Gruppen dienen.

Beispiele gut geeigneter hydrophiler Monomere mit funktionellen Gruppen (i) sind Acrylsäure, Methacrylsäure, beta-Carboxyethylacrylat, Ethacrylsäure, Crotonsäure, Maleinsäure, Fumarsäure oder Itaconsäure; olefinisch ungesättigte Sulfon oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester, insbesondere Acrylsäure und Methacrylsäure.

Beispiele gut geeigneter hydrophiler Monomere mit funktionellen Gruppen (ii) sind 2-Aminoethylacrylat und -methacrylat oder Allylamin.

Beispiele gut geeigneter hydrophiler Monomere mit funktionellen Gruppen (iii) sind omega-Hydroxy- oder omega-Methoxy-polyethylenoxid-1-yl-, omega-Methoxy-polypropylenoxid-1-yl-, oder omega-Methoxy-poly(ethylenoxid-co-polypropylenoxid)-1-yl-acrylat oder -methacrylat, sowie Hydroxy-subsitituierte Ethylene, Acrylate oder Methacrylate, wie beispielsweise Hydroxyethylmethacrylat.

Beispiele geeigneter Monomere für die Bildung zwitterionischer hydrophiler Polymere sind jene bei denen in der Seitenkette eine Betainstruktur auftritt. Vorzugsweise ist die Seitengruppe ausgewählt aus $-(CH_2)_m-(N^+(CH_3)_2)-(CH_2)_n-SO_3^-$, $-(CH_2)_m-(N^+(CH_3)_2)-(CH_2)_n-PO_3^2$, $-(CH_2)_m-(N^+(CH_3)_2)-(CH_2)_n-O-PO_3^{2-}$ oder-$(CH_2)_m-(P^+(CH_3)_2)-(CH_2)_n-SO_3^-$, wobei m steht für eine ganze Zahl aus dem Bereich von 1 bis 30, vorzugsweise aus dem Bereich 1 bis 6, insbesondere bevorzugt 2, und n steht für eine ganze Zahl aus dem Bereich von 1 bis 30, vorzugsweise aus dem Bereich 1 bis 8, insbesondere bevorzugt 3.

Insbesondere bevorzugt kann es dabei sein, wenn mindestens eine Struktureinheit des hydrophilen Blocks einen Phosphonium- oder Sulfonium-Rest aufweist.

Bei der Auswahl der hydrophilen Monomere ist darauf zu achten, dass vorzugsweise die hydrophilen Monomere mit funktionellen Gruppen (i) und die hydrophilen Monomere mit funktionellen Gruppen (ii) so miteinander kombiniert

werden, dass keine unlöslichen Salze oder Komplexe gebildet werden. Dagegen können die hydrophilen Monomere mit funktionellen Gruppen (i) oder mit funktionellen Gruppen (ii) mit den hydrophilen Monomeren mit funktionellen Gruppen (iii) beliebig kombiniert werden.

Von den vorstehend beschriebenen hydrophilen Monomeren werden die Monomeren mit den funktionellen Gruppen (i) besonders bevorzugt verwendet.

Vorzugsweise werden dabei die Neutralisationsmittel für die in Anionen umwandelbaren funktionellen Gruppen (i) aus der Gruppe, bestehend aus Ammoniak, Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin, Triethanolamin, Diethylentriamin und Triethylentetramin, und die Neutralisationsmittel für die in Kationen umwandelbaren funktionellen Gruppen (ii) ausgewählt aus der Gruppe, bestehend aus Schwefelsäure, Salzsäure, Phosphorsäure, Ameisensäure, Essigsäure, Milchsäure, Dimethylolpropionsäure and Zitronensäure ausgewählt.

Ganz besonders bevorzugt ist der hydrophile Block ausgewählt aus mono-, di- und triethylenglycol Struktureinheiten.

An den hydrophilen Block $A_{hp}$ angebunden folgt der hydrophobe Block $B_{hb}$. Der Block $B_{hb}$ basiert auf hydrophoben Gruppen oder, wie der hydrophile Block, auf der Polymerisation geeigneter hydrophober Monomere.

Beispiele geeigneter hydrophober Gruppen sind geradkettiges oder verzweigtes Alkyl mit 1-18 C-Atomen, geradkettiges oder verzweigtes Alkenyl mit 2-18 C-Atomen und einer oder mehreren Doppelbindungen, geradkettiges oder verzweigtes Alkinyl mit 2-18 C-Atomen und einer oder mehreren Dreifachbindungen, gesättigtes, teilweise oder vollständig ungesättigtes Cycloalkyl mit 3-7 C-Atomen, das mit Alkylgruppen mit 1-6 C-Atomen substituiert sein kann. Beispiele solcher Gruppen sind bereits vorab genannt. Darüber hinaus eignen sich Aryl, Polyaryl, Aryl-$C_1$-$C_6$-alkyl oder Ester mit mehr als 2 C-Atomen. Die genannten Gruppen können darüber hinaus auch substituiert sein, insbesondere mit Halogenen, wobei sich perfluorierte Gruppen besonders eignen.

Aryl-$C_1$-$C_6$-alkyl bedeutet beispielsweise Benzyl, Phenylethyl, Phenylpropyl, Phenylbutyl, Phenylpentyl oder Phenylhexyl, wobei sowohl der Phenylring als auch die Alkylenkette, wie zuvor beschrieben teilweise oder vollständig mit F substituiert sein können, besonders bevorzugt Benzyl oder Phenylpropyl.

Beispiele geeigneter hydrophober olefinisch ungesättigter Monomere für den hydrophoben Block $B_{hp}$ sind

(1) im wesentlichen säuregruppenfreie Ester olefinisch ungesättigter Säuren, wie (Meth)Acrylsäure-, Crotonsäure-, Ethacrylsäure-, Vinylphosphonsäure- oder Vinylsulfonsäurealkyl- oder - cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat, -ethacrylat oder -vinyiphosphonat oder vinylsulfonat; cycloaliphatische (Meth)acrylsäure-, Crotonsäure-, Ethacrylsäure-, Vinylphosphonsäure- oder Vinylsulfonsäureester, insbesondere Cyclohexyl-, Isobornyl-, Dicyclopentadienyl-, Octahydro-4,7-methano-1 H-inden-methanol- oder tert.-Butylcyclohexyl(meth)acrylat, - crotonat, -ethacrylat, vinylphosphonat oder vinylsulfonat. Diese können in untergeordneten Mengen höherfunktionelle (Meth)Acrylsäure-, Crotonsäure- oder Ethacrylsäurealkyl- oder -cycloalkylester wie Ethylengylkol-, Propylenglykol-, Diethylenglykil-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-dioldi(meth)acrylat, Trimethylolpropantri(meth)acrylat oder Pentaerythrittetra(meth)acrylat sowie die analogen Ethacrylate oder Crotonate enthalten. Im Rahmen der vorliegenden Erfindung sind hierbei unter untergeordneten Mengen an höherfunktionellen Monomeren (1) solche Mengen zu verstehen, welche nicht zur Vernetzung oder Gelierung der Polymerisate führen ;

(2) Monomere, die mindestens eine Hydroxylgruppe oder Hydroxymethylaminogruppe pro Molekül tragen und im wesentlichen säuregruppenfrei sind, wie

- Hydroxyalkylester von alpha,beta-olefinisch ungesättigten Carbonsäuren, wie Hydroxyalkylester der Acrylsäure, Methacrylsäure and Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat oder - ethacrylat; 1,4-Bis(hydroxymethyl)cyclohexan-, Octahydro-4,7-methano-1 H-indendimethanol- oder Methylpropandiolmonoacrylat, -monomethacrylat, monoethacrylat oder -monocrotonat; oder Umsetzungsprodukte aus cyclischen Estern, wie z.B. epsilon-Caprolacton und diesen Hydroxyalkylestern;

- olefinisch ungesättigte Alkohole wie Allylalkohol

- Allylether von Polyolen wie Trimethylolpropanmonoallylether oder Pentaerythritmono-, -di- oder -triallylether. Die höherfunktionellen Monomere werden im Allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Polymerisate führen,

- Umsetzungsprodukte von alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidylester einer Carbonsäure mit einem tertiären alpha-Kohlenstoffatom kann vorher, wahrend oder nach der Polymerisationsreaktion erfolgen. Bevorzugt wird als Monomer (2) das Umsetzungsprodukt von Acryl- und/oder Methacrylsaure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;

- Formaldehydaddukte von Aminoalkylestern von alpha,beta-olefinisch ungesättigten Carbonsäuren und von alpha,beta-ungesättigten Carbonsäureamiden, wie N-Methylol- und N,NDimethylol-aminoethylacrylat,

- aminoethylmethacrylat, -acrylamid und -methacrylamid; sowie

- Acryloxysilangruppen und Hydroxylgruppen enthaltende olefinisch ungesättigte Monomere, herstellbar durch Umsetzung hydroxyfunktioneller Silane mit Epichlorhydrin 30 und anschließender Umsetzung des Zwischenprodukts mit einer alpha,beta-olefinisch ungesättigten Carbonsäure, insbesondere Acrylsäure and Methacrylsäure, oder ihren Hydroxyalkylestern;

(3) Vinylester von in alpha-Stellung verzweigten Monocarbonsäuren mit 5 bis 18 Kohlenstoffatomen im Molekül, wie die Vinylester der Versatic®-Säure, die unter der Marke VeoVa® vertrieben werden;

(4) cyclische und/oder acyclische Olefine, wie Ethylen, Propylen, But-1-en, Pent-1-en, Hex-1-en, Cyclohexen, Cyclopenten, Norbonen, Butadien, Isopren, Cylopentadien und/oder Dicyclopentadien;

(5) Amide von alpha,beta-olefinisch ungesättigten Carbonsäuren, wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl- und/oder N, N-Cyclohexylmethyl-(meth)acrylsäureamid;

(6) Epoxidgruppen enthaltenden Monomere, wie der Glycidylester der Acrylsäure, Methacrylsäure, Ethacrylsäure, Crotonsäure, Maleinsäure, Fumarsäure und/oder Itaconsäure;

(7) vinylaromatische Kohlenwasserstoffe, wie Styrol, Vinyltoluol oder alpha-Alkylstyrole, insbesondere alpha-Methylstyrol;

(8) Nitrile, wie Acrylnitril oder Methacrylnitril;

(9) Vinylverbindungen, ausgewählt aus der Gruppe, bestehend aus Vinylhalogeniden wie Vinylchlorid, Vinylfluorid, Vinylidendichlorid, Vinylidendifluorid; Vinylamiden, wie N-Vinylpyrrolidon; Vinylethern wie Ethylvinylether, n-Propylvinylether, Isopropylvinylether, n-Butylvinylether, Isobutylvinylether und Vinylcyclohexylether; sowie Vinylestern wie Vinylacetat, Vinyipropionat, und Vinylbutyrat;

(10) Allylverbindungen, ausgewählt aus der Gruppe, bestehend aus Allylethern und -estern, wie Propylallylether, Butylallylether, Ethylenglykoldiallylether, Trimethylolpropantriallylether oder Allylacetat oder Allylpropionat; was die höherfunktionellen Monomere betrifft, gilt das vorstehend Gesagte sinngemäß;

(11) Siloxan oder Polysiloxanmonomere, die mit gesättigten, ungesättigten, geradkettigen oder verzweigten Alkylgruppen oder anderen bereits vorab genannten hydrophoben Gruppen substituiert sein können. Darüber hinaus eignen sich Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen, wie Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind; und

(12) Carbamat- oder Allophanatgruppen enthaltende Monomere, wie Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3,479,328 A 1, US 3,674,838 A 1, US 4,126,747 A 1, US 4,279,833 A 1 oder US 4,340,497 A 1 beschrieben.

Die Polymerisation der oben genannten Monomere kann auf allen dem Fachmann bekannten Arten erfolgen, z.B. durch Polyadditionen oder kationische, anionische oder radikalische Polymerisationen. Polyadditionen sind in diesem Zusammenhang bevorzugt, weil damit auf einfache Weise unterschiedliche Monomer-typen miteinander kombiniert werden können, wie beispielsweise Epoxide mit Dicarbonsäuren oder Isocyanate mit Diolen.

Die jeweiligen hydrophilen und hydrophoben Blöcke können grundsätzlich in beliebiger Weise-miteinander kombiniert werden. Vorzugsweise weisen die amphiphilen Silane gemäß der vorliegenden Erfindung einen HLB-Wert im Bereich von 2-19, vorzugsweise im Bereich von 4-15 auf. Der HLB-Wert ist dabei definiert als

$$HLB = \frac{Masse\ polare\ Anteile}{Molmasse} \bullet 20$$

und gibt an ob sich das Silan eher hydrophil oder hydrophob verhält, d.h. welcher der beiden Blöcke $A_{hp}$ und $B_{hb}$ die Eigenschaften des erfindungsgemäßen Silans dominiert. Der HLB-Wert wird theoretisch berechnet, und ergibt sich aus den Massenanteilen hydrophiler und hydrophober Gruppen. Ein HLB-Wert von 0 spricht für ein lipophile Verbindung, eine chemische Verbindung mir einem HLB-Wert von 20 hat nur hydrophile Anteile.

Die geeigneten amphiphilen Silane zeichnen sich weiterhin dadurch aus, dass sie vorteilhafterweise mindestens eine Thiol-, Sulfid- oder Disulfidgruppe an $A_{hp}$ und/oder $B_{hb}$ gebunden vorliegt. Vorzugsweise liegt die reaktive funktionelle Gruppe am hydrophoben Block $B_{hb}$ und dort insbesondere bevorzugt am Ende des hydrophoben Blocks gebunden vor. In der bevorzugten Ausführungsform weisen die Kopfgruppe $(R)_3Si$ und die Thiol-, Sulfid- oder Disulfidgruppe den größtmöglichen Abstand auf. Dies ermöglicht eine besonders flexible Gestaltung der Kettenlängen der Blöcke $A_{hp}$ und $B_{hb}$, ohne die mögliche Reaktivität der Thiol-, Sulfid- oder Disulfidgruppe, beispielsweise mit dem Umgebungsmedium, wesentlich einzuschränken.

Zusätzlich können neben der Thiol-, Sulfid-, Polysulfid- oder Disulfidgruppe weitere reaktive funktionelle Gruppe vorliegen, insbesondere ausgewählt aus Silylgruppen mit hydrolytisch abspaltbaren Resten, OH-, Carboxy-, NH-, SH-Gruppen, Halogenen oder Doppelbindungen enthaltenden reaktiven Gruppen, wie beispielsweise Acrylat- oder Vinylgruppen. Geeignete Silylgruppen mit hydrolytisch abspaltbaren Resten sind bereits vorab bei der Beschreibung der Kopfgruppe $(R)_3$ Si beschrieben. Vorzugsweise handelt es sich bei der zusätzlichen reaktiven Gruppe um eine OH-Gruppe.

In den erfindungsgemäßen Partikeln sind an die Kerne Oligomere und/oder Polymere vorzugsweise radial gebunden. Die Polymer- oder Oligomerketten können mit allen dem Fachmann bekannten Verfahren mit dem Kernmaterial zur Reaktion gebracht werden, um vorzugsweise mindestens eine kovalente Bindung auszubilden.
Weiterer Gegenstand der vorliegenden Erfindung ist somit ein Verfahren zur Herstellung der erfindungsgemäßen Klebstoff umfassend die Dispergierung von Kernen mit einem Durchmesser von > 1 nm in einem Lösungsmittel oder Lösungsmittelgemisch und Polymerisation in Gegenwart organischer Monomere, wobei die entstehenden Oligomere und/oder Polymere vorzugsweise radial an die Kerne angebunden werden. Dabei ist es wünschenswert, dass das Oligomer/Polymer nur mit einem Reaktionszentrum pro Polymer/Oligomerkette mit dem Kernmaterial reagiert und es ist besonders bevorzugt, dass dieses Reaktionszentrum endständig an der Polymerkette platziert ist. Dabei können sowohl in einem vorgeschalteten Schritt oder in einer externen Reaktion gebildete Polymere/Oligomere herangezogen werden, als auch die Polymere/Oligomere in situ während der kovalenten Verbindung mit dem Kernmaterial gebildet werden. Dies kann z.B. während einer radikalischen Polymerisation mit ungesättigten Monomeren in Gegenwart des vorzugsweise entsprechend (-SH) oberflächenmodifizierten Kernmaterials der Fall sein. Generell kann es wegen der sterischen Behinderung der Polymere/Oligomere untereinander vorteilhaft sein, wenn die Polymere vom Kernmaterial her ausgehend gebildet werden und nicht nachträglich mit dem Kern verbunden werden. Durch das Wegpolymerisieren kann somit gegebenenfalls eine weitgehend vollständige und dichte Belegung des Kernmaterials mit Polymer gewährleistet werden. Die Bildung der Polymerkette kann über verschiedene, dem Fachmann bekannte Kettenwachstumsreaktionen erfolgen Beispielhaft seien hier ionische Polymerisationen (ausgehend von Epoxyfunktionen, oder halogenierten Aromaten) und radikalische Polymerisationen genannt, wobei letztere bevorzugt sind, da sie auch in wässrigen Umgebungen durchführbar sind.

Die Synthese der Polymere und/oder Oligomere kann über dem Fachmann bekannte Kettenwachstumsreaktionen erfolgen, wobei die Ketten mit einer reaktiven Gruppe gestartet oder terminiert werden, die mit der Partikeloberfläche reagieren kann. Beispielhaft seien hier die anionische Polymerisation, sowie die kontrollierte und die freie radikalische Polymerisation, insbesondere RAFT, ATRP bzw. SET-LRP, genannt.

In einem weiteren bevorzugten Fall wird das Kernmaterial während der kovalenten Verknüpfung der Polymer/Oligomerketten gebildet. Dazu werden vorzugsweise endständig mit hydrolysierbaren/kondensierbaren Silan- oder metallorganischen Verbindungen modifizierte Polymere/Oligomere eingesetzt, die im Rahmen einer Hydrolyse und Polymerisation (auch in Gegenwart weiterer Silizium- und metallorganischer Verbindungen) zu einem Kernmaterial reagiert werden. Typische erfindungsgemäße Oligomere/Polymere sind z.B. Trialkoxysilylmerkaptopropyl-terminierte Polyacrylate, die z.B. erhältlich sind durch radikalische Polymerisation einer oder mehrerer ungesättigter Verbindungen mit Merkaptopropyltrialkoxysilan als Kettenüberträger oder bis-[3-trimethoxysilylpropyl]disulfid als Initiator. Weiterhin werden bevorzugt auch die Reaktionsprodukte endständig -OH modifizierter Polyester oder Polyether mit Isocyanatoalkyltrialkoxysilan eingesetzt. Alternativ dazu können auch Polymere mit einer hydrolysierbaren Silylverbindung in der Polymerkette eingesetzt werden, die dann eine Verknüpfung von 2 Oligomer/Polymersträngen über ein Verbindungsglied realisiert. Solche Oligomere/Polymere sind z.B. erhältlich durch radikalische Polymerisation von ungesättigten Verbindungen in Gegenwart von Methacryloxypropyltrimethoxysilan.

Neben silyl- und metallorganischen Reaktionszentren können auch geeignete organische Reaktionszentren, wie z.B. Amin-, Epoxy-, Hydroxy-, Merkapto-, Isocyanat-, Carboxylat-, Allyl- oder Vinyl-Gruppen eingesetzt werden, um mit geeigneten Reaktionspartnern auf der Seite des Kernmaterials zu reagieren. Beispielsweise kann ein epoxyfunktionelles Kernmaterial mit einem aminofunktionellen Polymer reagieren oder ein aminmodifiziertes Kernmaterial mit einem isocyanatfunktionellen Polymer/Oligomer.

Die Polymere/Oligomere können aus allen bekannten polymeren Stoffgruppen, bzw. deren Gemischen zusammengesetzt sein. Insbesondere sind die Oligomere und/oder Polymere ausgewählt aus der Gruppe umfassend Poly(meth) acrylate, Polyester, Polyurethane, Polyharnstoffe, Silikone, Polyether, Polyamide, Polyimide, bzw. deren Gemische und Hybride.

Beispiele gut geeigneter Monomere zur Bildung entsprechender Oligomere und/oder Polymere mit funktionellen Gruppen sind Acrylsäure, Methacrylsäure, beta-Carboxyethylacrylat, Ethacrylsäure, Crotonsäure, Maleinsäure, Fumarsäure oder Itaconsäure; olefinisch ungesättigte Sulfonoder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester, insbesondere Acrylsäure und Methacrylsäure.

Weitere Beispiele gut geeigneter Monomere mit funktionellen Gruppen sind 2-Aminoethylacrylat und -methacrylat oder Allylamin.

Weitere geeignete Monomere mit funktionellen Gruppen sind omega-Hydroxy- oder omega-Methoxy-polyethylenoxid-1-yl-, omega-Methoxypolypropylenoxid-1-yl-, oder omega-Methoxy-poly(ethylenoxid-copolypropylenoxid)-1-yl-acrylat oder -methacrylat, sowie Hydroxysubstituierte Ethylene, Acrylate oder Methacrylate, wie beispielsweise Hydroxyethylmethacrylat oder Hydroxypropylmethacrylat.

Beispiele geeigneter Monomere für die Bildung zwitterionischer hydrophiler Polymere sind jene bei denen in der Seitenkette eine Betainstruktur auftritt. Vorzugsweise ist die Seitengruppe ausgewählt aus $-(CH_2)_m-(N^+(CH_3)_2)-(CH_2)_n-SO_3^-$, $-(CH_2)_m-(N^+(CH_3)_2)-(CH_2)_n-PO_3^{2-}$, $-(CH_2)_m-(N^+(CH_3)_2)-(CH_2)_n-O-PO_3^{2-}$ oder $-(CH_2)_m-(P^+(CH_3)_2-(CH_2)_n-SO^{3-}$, wobei m steht für eine ganze Zahl aus dem Bereich von 1 bis 30, vorzugsweise aus dem Bereich 1 bis 6, insbesondere bevorzugt 2, und n steht für eine ganze Zahl aus dem Bereich von 1 bis 30, vorzugsweise aus dem Bereich 1 bis 8, insbesondere bevorzugt 3.

Pro Kern werden mindestens drei und besonders bevorzugt mindestens sechs Polymer/Oligomerketten kovalent angebunden. Die maximale Anzahl der an einem Kern gebundenen Polymer/Oligomerketten ist nur durch die technische Handhabbarkeit und Herstellbarkeit begrenzt.

Die Polymere bestehen aus einem Monomer oder (vorzugsweise) aus Monomergemischen. Die Monomere können bevorzugt auch reaktive Gruppen in den Seitenketten tragen, wie z.B. Hydroxy-, Epoxy, Allyl-, blockiertes Isocyanat, usw.

Weiterhin können die Seitenketten zusätzlich funktionelle gestaltet werden: z.B. Hydroxybenzophenon, Benztriazol als UV-Absorber oder Fluoreszenzfarbstoffe, die über Acrylatfunktion in die Polymerkette eingebaut werden.

Vorzugsweise ist die Polymer/Oligomer-Hülle reaktiv gegenüber weiteren Komponenten der Lacke, wie z.B. Vernetzer (insbesondere Isocyanat- oder Melaminvernetzer), bzw. härtbar durch Energieeinstrahlung (z.B. UV-Licht, Elektronenstrahlhärtung oder Wärme), z.B. durch enthaltene blockierte Isocyanate.

Dazu weisen die am Kernmaterial gebundenen Polymere wünschenswerterweise weitere reaktive Gruppen auf, mit denen sie anschließend zu einem 3-dimensional vernetzten Polymer reagieren können. Dies können z.B. ungesättigte Gruppen wie Acryl- oder Vinyl, oder auch Gruppen, die mit einem externen Vernetzer reagieren können, wie z.B. Epoxygruppen, NH-, COOH-, Alkoxysilyl- oder OH-Gruppen, die mit Isocyanaten vernetzt werden können. Insbesondere handelt es sich bei der funktionellen Gruppe um eine OH-Gruppe.

In der bevorzugten Ausführungsform der vorliegenden Erfindung ist die Oberfläche der Kerne mit mindestens einem Oberflächenmodifizierungsmittel beschichtet, welches mindestens eine funktionelle Gruppe ausgewählt aus der Gruppe umfassend Thiole, Sulfide, Disulfide oder Polysulfide aufweist. Die auf diese Weise modifizierten Kerne werden dann in einem zweiten Schritt in Gegenwart organischer Monomere im Zuge einer radikalischen Polymerisation umgesetzt, wobei das im ersten Schritt aufgebrachte Oberflächenmodifizierungsmittel als Radikalkettenüberträger fungiert. Eine radikalisch wachsende Polymerkette kann z.B. den Wasserstoff einer SH-Gruppe abstrahieren und erzeugt damit ein neues Radikal am Schwefel, das in der Lage ist, eine neue Polymerkette zu starten.

Insbesondere bevorzugte erfindungsgemäße Klebstoffe sind, dadurch gekennzeichnet, dass es sich um einen Epoxi-Klebstoff handelt und die Kern-Schale-Partikel eine Schale, enthaltend Oligo- oder Polyacrylat-Einheiten tragen, wobei die Acrylat-Einheiten zumindest teilweise Epoxifunktionen aufweisen.

Andere besonders bevorzugte Klebstoffe sind, dadurch gekennzeichnet, dass es sich um einen Polyurethan-Klebstoff handelt und die Kern-Schale-Partikel eine Schale, enthaltend Oligo- oder Polyacrylat-Einheiten tragen, wobei die Acrylat-Einheiten zumindest teilweise OH-Funktionen aufweisen.

Verfahren zur Herstellung der bevorzugten Klebstoffe, mit auf der Oberfläche der Kerne gebundenen Oberflächenmodifizierungsmitteln, umfassen die Schritte

a) Aufbringen mindestens eines Oberflächenmodifizierungsmittels, wobei mindestens ein Oberflächenmodifizierungsmittel mindestens eine funktionelle Gruppe aufweist, auf in einem Lösungsmittel dispergierte Kerne und
b) radikalische Polymerisation in Gegenwart organischer Monomere, wobei das in Schritt a) aufgebrachte Oberflächenmodifizierungsmittel mit mindestens einer funktionellen Gruppe als Radikalkettenüberträger fungiert,
c) gegebenenfalls Aufarbeitung des erfindungsgemäß hergestellten Klebstoffs durch Destillation, Fällung, Lösemitteltausch, Extraktion oder Chromatographie.

Insbesondere bevorzugt weist das in den erfindungsgemäßen Verfahren eingesetzte Oberflächenmodifizierungsmittel mindestens eine funktionelle Gruppe ausgewählt aus der Gruppe umfassend Thiole, Sulfide, Disulfide oder Polysulfide auf.

Zum Start der radikalischen Polymerisation eignen sich grundsätzlich alle dem Fachmann bekannten Arten. Bevorzugt wird die radikalische Polymerisation in für den Fachmann bekannter Weise mit AIBN oder AIBNderivaten initiiert.

Für die Durchführung der Polymerisation eignen sich ebenfalls alle dem Fachmann bekannten Prozessarten. So kann beispielsweise die Zugabe der Monomere und des Radikalstarters in einem Schritt erfolgen, dies ist die bevorzugte Ausführungsform. Weiterhin ist es auch möglich, dass die Zugabe der Monomere und der Radikalstarter stufenweise erfolgt, z.B. mit Nachinitiierung und portionsweiser Zugabe der Monomere. Weiterhin ist es auch möglich, die Monomerzusammensetzung im Verlauf der Polymerisation schrittweise zu verändern, z.B. durch zeitlich gesteuerte Zugabe zuerst hydrophiler, dann hydrophober Monomere oder umgekehrt. Dies ist insbesondere bei Verwendung eines dem Fachmann bekannten kontrollierten radikalischen Polymerisationsverfahrens möglich.

Das oben genannte Lösungsmittel oder Lösungsmittelgemisch ist ausgewählt aus Wasser, organischen Lösungsmitteln oder aus Gemischen hieraus. Werden Lösungsmittelgemisch und Monomere so gewählt, das zwar die Monomere, die daraus gebildeten Polymere ab einer bestimmten Kettenlänge jedoch nicht mehr löslich sind, fallen die erfindungsgemäßen Klebstoffe aus der Reaktionsmischung aus. Die ausgefallenen Klebstoffe können vom in dem Reaktionsmedium befindlichen freien Polymer oder von nicht umgesetzten Oberflächenmodifizierungsmittel abgetrennt werden. Dies kann nach gängigen dem Fachmann bekannten Methoden erfolgen. In einer bevorzugten Ausführungsform wird die Polymerisation in einem Lösungsmittel oder Lösungsmittelgemisch durchgeführt, in dem die Monomere löslich sind, die gebildeten Polymere ab einer bestimmten Kettenlänge jedoch nicht. Dadurch fallen die Klebstoffe aus der Reaktionslösung aus. Restmonomere und eventuell bei der Herstellung der Kerne oder deren Funktionalisierung nicht umgesetzte, noch in Lösung befindliche Reagenzien oder gelöste Nebenprodukte sind einfach, zum Beispiel durch Filtration, abtrennbar.

In einem anderen Verfahren wird durch einen externen Trigger, wie z.B. Temperaturveränderung, Salzzugabe oder Zugabe eines Nichtlösemittels eine Phasentrennung zu einem bestimmten Zeitpunkt induziert. Die Klebstoffsynthese kann damit zu beliebigen Zeitpunkten unterbrochen werden, um zum Beispiel die Oberflächenbelegung zu steuern.

Die aus den vorab genannten Verfahren erhältlichen Kern-Schale-Partikel eignen sich in besonderer Weise für die Verwendung in Klebstoffen bzw. als Zuschlagstoff für Klebstoffe, wie vorab beschrieben. Die neuen Klebstoffe unterscheiden sich in ihrem Aussehen kaum von herkömmlichen Klebstoffen. Weiterhin entspricht die Handhabung und Verarbeitung der erfindungsgemäßen Klebstoffe denen herkömmlicher Klebstoffe. Schwierigkeiten, die bei der Herstellung von Nanokompositen nach dem Stand der Technik bestehen (Dispergieraufwand, Handhabung von Pulvern), entfallen.

Ein wichtiger Nebeneffekt bei diesem alternativen Klebstoffansatz ist die mögliche Inkorporierung von weiteren Funktionen durch die Kern-Schale-Partikel. So können elektromagnetische Strahlen beeinflusst werden (UV-Absorption, IR-Absorption), katalytische Effekte ausgeübt werden, anorganische Nanofarbpigmente benutzt werden oder z.B. Nanophosphore als anorganischer Kern genutzt werden.

Die nachfolgenden Beispiele illustrieren die Erfindung lediglich, ohne den Schutzbereich zu beschränken. Insbesondere sind die darin beschriebenen Merkmale, Eigenschaften und Vorteile der dem betreffenden Beispiel zugrunde liegenden definierten Verbindung(en) auch auf andere, nicht im Detail aufgeführte, aber unter den Schutzbereich der Ansprüche fallende Stoffe und Verbindungen anwendbar, sofern an anderer Stelle nichts Gegenteiliges gesagt wird.

**Beispiele**:

Beispiel 1: Kern-Schale Partikel für 2 Komponenten-Epoxidklebstoffe 10 g Glycidyloxymethacrylat, 45 g Methylmethacrylat, 45 g n-Butylacrylat 5,7 g 3-Mercaptopropyltrimethoxysilan und 0,48 g Azodiisobutyronitril werden in 200 ml Isopropanol 17 Std unter Rückfluss erhitzt. Der Ansatz wird auf Raumtemperatur abgekühlt und zu 167 g eines sauer eingestellten (pH 2) 30 % Kieselsols (z.B.30 % Levasil 300/30) gegeben. Der Ansatz wird mit 12,5 g n-Propyltrimethoxysilan versetzt und 3 Std bei 60°C gerührt. Anschließend wird das Wasser/Isopropanol Gemisch unter reduziertem Druck abdestilliert und mit 3000 g Epoxyharz (z.B. Dow D.E.R 331) verdünnt. Das Material eignet sich Konstruktionsklebstoffe, Vergussanwendungen und Spachtelmaterial.

Beispiel 2: Kern-Schale Partikel für photoinitiiert härtende Epoxidharze Die Herstellung erfolgt analog zu Beispiel 1, wobei anstelle des Glycidyloxymethacrylathes das 3,4-Epoxycyclohecylmethacrylat eingesetzt wird. Als Basisharz verwendet man cycloaliphatische Epoxidharze wie z. B 3,4- Epoxycyclohexylmethyl-3',4'-epoxycyclohexylcarboxylat. Dem Ansatz wird Ferroceniumhexafluoroantimonat in einer Konzentration von 1 % als Photoinitiator zugegeben. Das Material eignet sich zum Kleben von Glas und Kunststoffen auch mit Metallen sowie Dicht- und Vergussmassen.

Beispiel 3: Kern- Schale Partikel für PUR-Klebstoffe 33,3g eines auf pH 2 eingestellten 30%igen Kieselsols (Levasil 300/30) werden mit 33 g Isopropanol verdünnt und mit 2 g 3-Mercaptopropyltrimethoxysilan versetzt. Der Ansatz wird 6 Std bei 60°C gerührt. Anschließend werden 2 g 2-Hydroxyethylmethacrylat, 7,2 g Methylmethacrylat, 9,2 g n-Butylacrylat 5,7 g und 0,48 g Azodiisobutyronitril zugegeben und 17 Std unter Rückfluss erhitzt. Das Wasser/Isopropanol Gemisch wird unter reduziertem Druck abdestilliert und mit der gewünschten Menge Polyesterpolyol verdünnt (z.B. 300g Baycoll AD 1100). Das Material kann mit der entsprechenden Menge Polyisocyanat gehärtet werden (z.B. Desmodur RC). Einsatzgebiete dieses Klebers sind u.a. Gehäusedichtungen und im Konstruktionsbereich.

Beispiel 4: Kern- Schale Partikel für photoinitiiert härtende Acrylatklebstoffe 50 g Methylmethacrylat, 50 g n-Butylacrylat, 5,7 g 3-Mercaptopropyltrimethoxysilan und 0,48 g Azodiisobutyronitril werden in 200 ml Isopropanol 17 Std unter Rückfluss erhitzt. Der Ansatz wird auf Raumtemperatur abgekühlt und zu 167 g eines sauer eingestelltem (pH2) 30 % Kieselsols (z.B. Levasil 300/30) gegeben. Der Ansatz wird mit 12,5 g 3-Mercaptopropyltrimethoxysilan versetzt und 3 Std bei 60°C gerührt. Anschließend wird das Wasser/Isopropanol Gemisch unter reduziertem Druck abdestilliert und mit der gewünschten Menge Acrylat (z.B. 3000 g Laromer TPGDA oder Sartomer SR399) verdünnt und mit 2 % Darocure 1173 versetzt. Das Material findet Verwendung beim Kleben von Glas- und Kunststoffteilen.

Beispiel 5: Herstellung eines Kohlenstoff-Faserverbundmaterials mit Kern/Schale Partikeln 10 g Glycidyloxymethacrylat, 45 g Methylmethacrylat, 45 g n-Butylacrylat 5,7 g 3-Mercaptopropyltrimethoxysilan und 0,48 g Azodiisobutyronitril werden in 200 ml Isopropanol 17 Std unter Rückfluss erhitzt. Der Ansatz wird auf Raumtemperatur abgekühlt und zu 167 g eines sauer eingestelltem (pH 2) 30 % Kieselsols (z.B.30 % Levasil 300/30) gegeben. Der Ansatz wird mit 12,5 g n-Propyltrimethoxysilan versetzt und 3 Std bei 60°C gerührt. Anschließend wird das Wasser/Isopropanol Gemisch unter reduziertem Druck abdestilliert und mit 3000 g Epoxyharz (z.B. Dow D.E.R 331) verdünnt.

Ausgehend von diesem Masterbatch werden verschiedene Abmischungen mit dem Epoxidharz DER 331 hergestellt, um den Einfluss unterschiedlicher Mengen an Kern/Schale Partikeln auf die mechanischen Eigenschaften der Epoxidharze zu untersuchen. Dazu wird der Masterbatch aus Kern/Schale Partikeln mit DOW DER 311 mit einem Dissolver bei einer Drehzahl von 1000 U/min unter Vakuum 10 Minuten gerührt. Anschließend wurde der Härter (Aradur HY2954, Cycloaliphatisches Diamin) unter den gleichen Bedingungen zugegeben und weitere 5 Minuten unter Vakuum gerührt. Die Aushärtung von mit Kern/Schale Partikeln gefüllten Epoxidharzblöcken erfolgte durch das Abfahren eines Temperaturprofils von 8h bei 72 °C, gefolgt von 16 h bei 122°C, danach Abkühlen auf Raumtemperatur.
Die Bruchzähigkeit der Epoxidharzblöcke wurde nach ASTM E399-90 an einer Universalprüfmaschine von Zwick durchgeführt. Dabei ergab sich folgendes Ergebnis:

| Nanopartikelgehalt Nol% | Bruchzähigkeit K1c/ [MPa $m^{1/2}$] |
|---|---|
| 0 | 0,50 |

(fortgesetzt)

| Nanopartikelgehalt Nol% | Bruchzähigkeit K1c/ [MPa $m^{1/2}$] |
|---|---|
| 1 | 0,58 |
| 2 | 0,64 |
| 5 | 0,74 |
| 19 | 1,28 |

Man sieht, dass die Bruchzähigkeit der Epoxidharzblöcke durch den Einbau von Kern/Schale Partikeln deutlich verbessert wird.

Das Kern/Schale modifizierte Epoxidharz kann vor der Aushärtung dazu benutzt werden, Kohlefaserstränge zu benetzen und daraus Formkörper z.B. durch Wickeln oder Aufeinanderlegen getränkter Fasermatten herzustellen. Die so hergestellten Kohlefaserverbundwerkstoffe zeichnen sich durch eine besonders hohe Belastbarkeit aus.

## Patentansprüche

1. Klebstoff enthaltend mindestens ein Matrixmaterial und Kem-Schale-Partikel umfassend Kerne mit einem Durchmesser im Bereich von 1 nm bis 1 $\mu$m mit einer Schale enthaltend Oligomere und/oder Polymere, wobei als Matrixmaterial ein Polymeres ausgewählt aus der Gruppe der Polyurethane oder ein Gemisch daraus oder entsprechend polymerisierbare Monomere oder Oligomere, oder ein Ethylen-Vinylacetat Copolymeres oder ein Gemisch aus zwei oder mehr solcher Copolymeren, enthalten sind,
**dadurch gekennzeichnet, dass** die Oligomere und/oder Polymere der Schale kovalent an die Oberfläche der Kerne gebunden sind und ausgewählt sind aus der Gruppe umfassend Poly(meth)acrylate, Polyester, Polyurethane, Polyharnstoffe, Silikone, Polyether, Polyamide, Polyimide, bzw, deren Gemische und Hybride,
und die Kerne auf Sulfaten oder Carbonaten von Erdalkaliverbindungen oder auf Oxiden bzw. Hydroxiden von Silizium, Titan, Zink, Zinn, Indium, Antimon, Aluminium, Cer, Cobalt, Chrom, Nickel, Eisen, Yttrium oder Zirkonium oder Mischungen hieraus basieren, die optional mit Metall-Oxiden bzw. -Hydroxiden beschichtet sein können, oder auf mit Metall-Oxiden bzw. -Hydroxiden beschichteten Metallen, wie beispielsweise Ag, Cu, Fe, Au, Pd, Pt oder Legierungen basieren.

2. Klebstoff gemäß Anspruch 1, **dadurch gekennzeichnet, dass** es sich bei dem Klebstoff um einen Haftklebstoff oder einen Kontaktklebstoff handelt.

3. Klebstoff gemäß Anspruch 1 oder 2, **dadurch gekennzeichnet, dass** er ein Schmelzklebstoff oder ein Dispersionsklebstoff ist.

4. Klebstoff gemäß Anspruch 1 oder 2, **dadurch gekennzeichnet, dass** es sich bei dem Klebstoff um einen Reaktivklebstoff, bzw. Teil eines faserverstärkten Kunststoffes handelt.

5. Klebstoff gemäß einem oder mehreren der Ansprüche 1 bis 4, **dadurch gekennzeichnet, dass** die Kerne ausgewählt sind aus $SiO_2$-Partikeln, oder ausgewählt sind aus ZnO- oder Ceroxid Partikeln oder $TiO_2$-Partikeln, die optional mit Metall-Oxiden bzw. -Hydroxiden beschichtet sind.

6. Klebstoff gemäß einem oder mehreren der Ansprüche 1 bis 5, **dadurch gekennzeichnet, dass** die Kerne ausgewählt sind aus 3-dimensional vernetzten Organosesqisiloxanstrukturen und Metalloxiden/-hydroxiden.

7. Klebstoff gemäß einem oder mehreren der Ansprüche 1 bis 6, **dadurch gekennzeichnet, dass** die Kerne Durchmesser, bestimmt mittels Partikel-Korrelations-Spektroskopie bzw. Transmissionselektronenmikroskop, von 1 bis 20 nm In mindestens einer Dimension aufweisen, vorzugsweise von maximal 500 nm in maximal zwei Dimensionen aufweisen.

8. Klebstoff gemäß einem oder mehreren der Ansprüche 1 bis 7, **dadurch gekennzeichnet, dass** die Oberfläche der Kern-Schale-Partikel mit mindestens einem Oberflächenmodifizierungsmittel modifiziert ist.

9. Klebstoff gemäß Anspruch 8, **dadurch gekennzeichnet, dass** mindestens ein Oberflächenmodifizierungsmittel

mindestens eine funktionelle Gruppe ausgewählt aus der Gruppe umfassend Thiole, Sulfide, Disulfide oder Polysulfide, Epoxide, Hydroxide, Carboxy Isocyanat und Alkenyl bzw. Alkinyl aufweist oder ausgewählt ist aus der Gruppe aus organofunktionellen Silanen, quartären Ammoniumverbindungen, Carbonsäuren, Phosphonaten, Phosphoniumund Sulfoniumverbindungen oder Gemischen hieraus.

**10.** Klebstoff gemäß einem oder mehreren der Ansprüche 1 bis 9, **dadurch gekennzeichnet, dass** er die Kern-Schale-Partikel in einer Menge von 0,1 bis 50 Gew.-%, vorzugsweise in einer Menge von 1 bis 30 Gew.%, insbesondere 2 bis 20 Gew.%.enthält.

**11.** Klebstoff gemäß einem oder mehreren der Ansprüche 1 bis 10, **dadurch gekennzeichnet, dass** das Gewichtsverhältnis Kern zu Schale der Kern-Schale-Partikel im Bereich von 1:10 bis 1:0,1 liegt.

**12.** Klebstoff gemäß einem oder mehreren der Ansprüche 1 bis 11, **dadurch gekennzeichnet, dass** die Oligomere und/oder Polymere der Schale funktionalisiert sind mit Gruppen, die mindestens eine chemische Funktion gewählt aus -OH, -SH, $-NH_2$, -COOH, -NCO, -NCOR, Säureanhydriden, Epoxiden, wie Glycidylethergruppen, ungesättigte Gruppen oder CH-aciden Gruppen wie

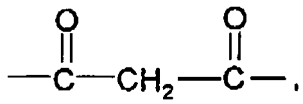

aufweisen.

**13.** Klebstoff gemäß einem oder mehreren der Ansprüche 1 bis 12, **dadurch gekennzeichnet, dass** es sich um einen Epoxi-Klebstoff handelt und die Kern-Schale-Partikel eine Schale, enthaltend Oligo- oder Polyacrylat-Einheiten tragen, wobei die Acrylat-Einheiten zumindest teilweise Epoxifunktionen aufweisen.

**14.** Klebstoff gemäß einem oder mehreren der Ansprüche 1 bis 12, **dadurch gekennzeichnet, dass** es sich um einen Polyurethan-Klebstoff handelt und die Kern-Schale-Partikel eine Schale, enthaltend Oligo- oder Polyacrylat-Einheiten tragen, wobei die Acrylat-Einheiten zumindest teilweise OH-Funktionen aufweisen.

**15.** Verfahren zur Herstellung von Klebstoffen gemäß einem oder mehreren der Ansprüche 1 bis 14 umfassend die Dispergierung von Kem-Schale-Partikeln mit einem Durchmesser von > 1 nm in einem Polymeren und ggf. Lösungsmittel oder Lösungsmittelgemisch.

**16.** Verwendung von Kern-Schale-Partikeln umfassend Kerne mit einem Durchmesser im Bereich von 1 nm bis 1 μm mit einer Schale enthaltend Oligomere und/oder Polymere in Klebstoffen gemäß einem oder mehreren der Ansprüche 1 bis 14 bzw. als Zuschlagstoff zu Klebstoffen oder als Teil von Verbundmaterialien wie faserverstärkten Kunststoffen gemäß einem oder mehreren der Ansprüche 1 bis 14.

## Claims

**1.** Adhesive comprising at least one matrix material and core/shell particles comprising cores having a diameter in the range from 1 nm to 1 μm with a shell comprising oligomers and/or polymers,
where the matrix material present is a polymer selected from the group of the polyurethanes or a mixture thereof or correspondingly polymerisable monomers or oligomers, or an ethylene-vinyl acetate copolymer or a mixture of two or more such copolymers,
**characterised in that** the oligomers and/or polymers of the shell are covalently bonded to the surface of the cores and are selected from the group comprising poly(meth)acrylates, polyesters, polyurethanes, polyureas, silicones, polyethers, polyamides, polyimides, or mixtures and hybrids thereof,
and the cores are based on sulfates or carbonates of alkaline-earth metal compounds or on oxides or hydroxides of silicon, titanium, zinc, tin, indium, antimony, aluminium, cerium, cobalt, chromium, nickel, iron, yttrium or zirconium or mixtures thereof, which may optionally be coated with metal oxides or hydroxides, or on metals, such as, for example, Ag, Cu, Fe, Au, Pd, Pt or alloys, coated with metal oxides or hydroxides.

**2.** Adhesive according to Claim 1, **characterised in that** the adhesive is a pressure-sensitive adhesive or a contact

adhesive.

3. Adhesive according to Claim 1 or 2, **characterised in that** it is a hot-melt adhesive or a dispersion adhesive.

4. Adhesive according to Claim 1 or 2, **characterised in that** the adhesive is a reactive adhesive or part of a fibre-reinforced plastic.

5. Adhesive according to one or more of Claims 1 to 4, **characterised in that** the cores are selected from $SiO_2$ particles or are selected from ZnO or cerium oxide particles or $TiO_2$ particles, which are optionally coated with metal oxides or hydroxides.

6. Adhesive according to one or more of Claims 1 to 5, **characterised in that** the cores are selected from 3-dimensionally crosslinked organosesquisiloxane structures and metal oxides/hydroxides.

7. Adhesive according to one or more of Claims 1 to 6, **characterised in that** the cores have diameters, determined by means of particle correlation spectroscopy or a transmission electron microscope, of 1 to 20 nm in at least one dimension, preferably a maximum of 500 nm in a maximum of two dimensions.

8. Adhesive according to one or more of Claims 1 to 7, **characterised in that** the surface of the core/shell particles has been modified by means of at least one surface modifier.

9. Adhesive according to Claim 8, **characterised in that** at least one surface modifier contains at least one functional group selected from the group comprising thiols, sulfides, disulfides or polysulfides, epoxides, hydroxides, carboxyl, isocyanate and alkenyl or alkynyl or is selected from the group of organofunctional silanes, quaternary ammonium compounds, carboxylic acids, phosphonates, phosphonium and sulfonium compounds or mixtures thereof.

10. Adhesive according to one or more of Claims 1 to 9, **characterised in that** it comprises the core/shell particles in an amount of 0.1 to 50% by weight, preferably in an amount of 1 to 30% by weight, in particular 2 to 20% by weight.

11. Adhesive according to one or more of Claims 1 to 10, **characterised in that** the core:shell weight ratio of the core/shell particles is in the range from 1:10 to 1:0.1.

12. Adhesive according to one or more of Claims 1 to 11, **characterised in that** the oligomers and/or polymers of the shell have been functionalised with groups which have at least one chemical function selected from -OH, -SH, $-NH_2$, -COOH, -NCO, -NCOR, acid anhydrides, epoxides, such as glycidyl ether groups, unsaturated groups, or CH-acidic groups, such as

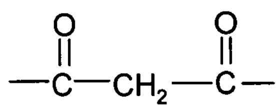 .

13. Adhesive according to one or more of Claims 1 to 12, **characterised in that** it is an epoxy adhesive, and the core/shell particles carry a shell comprising oligo- or polyacrylate units, where at least some of the acrylate units have epoxy functions.

14. Adhesive according to one or more of Claims 1 to 12, **characterised in that** it is a polyurethane adhesive, and the core/shell particles carry a shell comprising oligo- or polyacrylate units, where at least some of the acrylate units have OH functions.

15. Process for the preparation of adhesives according to one or more of Claims 1 to 14, comprising the dispersal of core/shell particles having a diameter of > 1 nm in a polymer and optionally solvents or a solvent mixture.

16. Use of core/shell particles comprising cores having a diameter in the range from 1 nm to 1 μm with a shell comprising oligomers and/or polymers in adhesives according to one or more of Claims 1 to 14 or as additive to adhesives or as part of composite materials, such as fibre-reinforced plastics according to one or more of Claims 1 to 14.

## Revendications

1. Adhésif comprenant au moins un matériau de matrice et des particules coeur/écorce comprenant des coeurs ayant un diamètre dans la plage allant de 1 nm à 1 μm avec une écorce comprenant des oligomères et/ou des polymères, où le matériau de matrice présent est un polymère choisi dans le groupe constitué par les polyuréthanes ou un mélange de ceux-ci ou des monomères ou oligomères polymérisables de manière correspondante, ou un copolymère d'éthylène-acétate de vinyle ou un mélange de deux, ou plus, de tels copolymères,
**caractérisé en ce que** les oligomères et/ou polymères de l'écorce sont liés de manière covalente à la surface des coeurs et sont choisis dans le groupe comprenant les poly(méth)acrylates, les polyesters, les polyuréthanes, les polyurées, les silicones, les polyéthers, les polyamides, les polyimides, ou des mélanges et hybrides de ceux-ci, et les coeurs sont à base de sulfates ou carbonates de composés de métaux alcalino-terreux ou d'oxydes ou hydroxydes de silicium, titane, zinc, tin, indium, antimoine, aluminium, cérium, cobalt, chrome, nickel, fer, yttrium ou zirconium ou des mélanges de ceux-ci, pouvant éventuellement être revêtus par des oxydes ou hydroxydes métalliques, ou de métaux, tels que par exemple Ag, Cu, Fe, Au, Pd, Pt ou des alliages, revêtus par des oxydes ou hydroxydes métalliques.

2. Adhésif selon la revendication 1, **caractérisé en ce que** l'adhésif est un adhésif sensible à la pression ou un adhésif de contact.

3. Adhésif selon la revendication 1 ou 2, **caractérisé en ce qu'**il s'agit d'un adhésif thermofusible ou d'un adhésif en dispersion.

4. Adhésif selon la revendication 1 ou 2, **caractérisé en ce que** l'adhésif est un adhésif réactif ou fait partie d'un plastique renforcé par des fibres.

5. Adhésif selon l'une ou plusieurs parmi les revendications 1 à 4, **caractérisé en ce que** les coeurs sont choisis parmi des particules de $SiO_2$ ou sont choisis parmi des particules de ZnO ou d'oxyde de cérium ou des particules de $TiO_2$. qui sont éventuellement revêtues par des oxydes ou hydroxydes métalliques.

6. Adhésif selon l'une ou plusieurs parmi les revendications 1 à 5, **caractérisé en ce que** les coeurs sont choisis parmi des structures d'organosesquisiloxane à réticulation tridimensionnelle et des oxydes/hydroxydes métalliques.

7. Adhésif selon l'une ou plusieurs parmi les revendications 1 à 6, **caractérisé en ce que** les coeurs possèdent des diamètres, déterminés par spectroscopie de corrélation de photons ou microscopie électronique en transmission, allant de 1 à 20 nm selon au moins une dimension, préférablement un maximum de 500 nm selon un maximum de deux dimensions.

8. Adhésif selon l'une ou plusieurs parmi les revendications 1 à 7, **caractérisé en ce que** la surface des particules coeur/écorce a été modifiée à l'aide d'au moins un agent de modification de surface.

9. Adhésif selon la revendication 8, **caractérisé en ce qu'**au moins un agent de modification de surface contient au moins un groupement fonctionnel choisi dans le groupe comprenant les thiols, les sulfures, les disulfures ou les polysulfures, les époxydes, les hydroxydes, carboxyle, isocyanate et alcényle ou alcynyle ou est choisi dans le groupe constitué par les silanes organo-fonctionnels, les composés d'ammonium quaternaire, les acides carboxyliques, les phosphonates, les composés de phosphonium et de sulfonium ou des mélanges de ceux-ci.

10. Adhésif selon l'une ou plusieurs parmi les revendications 1 à 9, **caractérisé en ce qu'**il comprend les particules coeur/écorce selon une quantité allant de 0,1 à 50% en poids, préférablement selon une quantité allant de 1 à 30% en poids, en particulier de 2 à 20% en poids.

11. Adhésif selon l'une ou plusieurs parmi les revendications 1 à 10, **caractérisé en ce que** le rapport pondéral coeur: écorce des particules coeur/ écorce se trouve dans la plage allant de 1:10 à 1:0.1.

12. Adhésif selon l'une ou plusieurs parmi les revendications 1 à 11, **caractérisé en ce que** les oligomères et/ou polymères de l'écorce ont été fonctionnalisés par des groupements ayant au moins une fonction chimique choisie parmi -OH, -SH, $-NH_2$, -COOH, -NCO, -NCOR, les anhydrides d'acide, les époxydes, tels que les groupements éther de glycidyle, des groupements insaturés, ou des groupements CH-acides, tels que

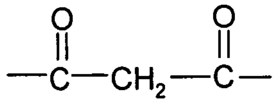 .

**13.** Adhésif selon l'une ou plusieurs parmi les revendications 1 à 12, **caractérisé en ce qu'**il s'agit d'un adhésif époxy, et les particules coeur/écorce portent une écorce comprenant des motifs oligo- ou polyacrylate, où au moins une partie des motifs acrylate possèdent des fonctions époxy.

**14.** Adhésif selon l'une ou plusieurs parmi les revendications 1 à 12, **caractérisé en ce qu'**il s'agit d'un adhésif polyuréthane, et les particules coeur/ écorce portent une écorce comprenant des motifs oligo- ou polyacrylate, où au moins une partie des motifs acrylate possèdent des fonctions OH.

**15.** Procédé de préparation d'adhésifs selon l'une ou plusieurs parmi les revendications 1 à 14, comprenant la dispersion de particules coeur/ écorce ayant un diamètre > 1 nm dans un polymère et éventuellement des solvants ou un mélange de solvants.

**16.** Utilisation de particules coeur/écorce comprenant des coeurs ayant un diamètre dans la plage allant de 1 nm à 1 μm avec une écorce comprenant des oligomères et/ou polymères dans des adhésifs selon l'une ou plusieurs parmi les revendications 1 à 14 ou comme additif pour des adhésifs ou comme partie de matériaux composites, tels que des plastiques renforcés par des fibres, selon l'une ou plusieurs parmi les revendications 1 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008146014 A2
- US 20060019088 A1
- WO 2008045270 A1
- EP 1820819 A1
- WO 03042315 A1
- WO 0032688 A
- US 6291593 B1
- EP 2008000532 W
- DE 102005056622
- DE 102005056621
- DE 4011044 C2
- DE 3807571 A1
- DE 3706095 A1
- EP 0358153 A
- US 4754014 A1
- DE 4421823 A1
- WO 9222615 A
- US 3479328 A1
- US 3674838 A1
- US 4126747 A1
- US 4279833 A1
- US 4340497 A1


### In der Beschreibung aufgeführte Nicht-Patentliteratur


- Römpp Lexikon Lacke und Druckfarben. Georg Thieme Verlag, 1998, 605, 606